# EUROPEAN PATENT SPECIFICATION

(11) **EP 3 832 217 B1**
(45) Date of publication and mention of the grant of the patent: **29.11.2023**
(21) Application number: 20212068.9
(22) Date of filing: 05.12.2020
(51) Int. Cl.: F24F 8/117, F24F 8/133, F24F 13/08, F04D 29/44, F04D 25/08, F04D 29/66, F04D 29/70

(54) **APPARATUS FOR BOTH HUMIDIFICATION AND AIR CLEANING**
VORRICHTUNG ZUR SOWOHL BEFEUCHTUNG ALS AUCH LUFTREINIGUNG
APPAREIL DE NETTOYAGE ET D'HUMIDIFICATION DE L'AIR

(30) Priority: 06.12.2019 KR 20190161480
(43) Date of publication of application: 09.06.2021
(73) Proprietor: LG Electronics Inc., Yeongdeungpo-gu Seoul 07336 (KR)
(72) Inventor: JUNG, Jaehyuk, 08592 Seoul (KR); YANG, Seungdeok, 08592 Seoul (KR); CHOI, Seokho, Seoul (KR)
(74) Representative: Ter Meer Steinmeister & Partner

(56) References cited:
- EP-A1- 3 163 191
- WO-A1-2013/141549
- KR-A- 20160 012 796
- KR-A- 20160 017 587
- KR-A- 20180 063 725
- US-A1- 2018 147 523

## Description

### BACKGROUND OF THE INVENTION

### 1.Field of the invention

The present invention relates to an apparatus for both humidification and air cleaning.

### 2. Description of the Related Art

Air conditioning apparatuses include air conditioners that control the temperature of air, air cleaners that remove foreign substances from air to maintain air cleanliness, humidifiers that increase humidity in the air, and dehumidifiers that reduce humidity in the air.

Typical humidifiers are classified into a vibration type, which atomizes water on a vibrating plate and discharges it into air, and a natural evaporation type which evaporates water in a humidification filter.

The natural evaporation type humidifier is classified into a disc type humidifier which rotates a disc using a driving force and allows water to naturally evaporate from the surface of the disc in the air and a humidification filter type humidifier which allows water to naturally evaporate from a wet humidification medium by flowing air.

Korean Laid-Open Patent Publication No. 10-2017-0051233 (hereinafter referred to as "prior art 1") discloses an apparatus for both humidification and air cleaning.

The apparatus for both humidification and air cleaning disclosed in prior art 1 includes a discharge humidification medium which covers a discharge port to prevent droplets, scattered from a water tank, from being directly discharged through the discharge port at the upper side of the water tank.
A general mesh type discharge humidification medium may prevent the droplets from being scattered to an indoor space, but has a problem in that the discharge humidification medium covers the entire discharge port, thereby causing resistance to the discharged air and reducing the air volume.
KR 2018 0063725 A relates to a humidification and air cleaning apparatus, which comprises a spray module placed in the center of a water container unit and a storage unit.

### SUMMARY OF THE INVENTION

It is an object of the present invention to provide a humidification and air cleaning apparatus capable of minimizing scattering of droplets to an indoor space through a discharge port while minimizing resistance of discharged air.

It is another object of the present invention to provide a humidification and air cleaning apparatus capable of providing a larger air volume while minimizing scattering of droplets.

It is yet another object of the present invention to provide a humidification and air cleaning apparatus capable of providing the same air volume with less power consumption, while minimizing scattering of droplets.

It is still another object of the present invention to provide a humidification and air cleaning apparatus having vanes which may minimize resistance of discharged air and scattering of droplets to an indoor space.

It is still another object of the present invention to provide a humidification and air cleaning apparatus having vanes which may cover the entire discharge port.

It is still another object of the present invention to provide the shape and arrangement of vanes for minimizing scattering of droplets.

The objects of the present invention are not limited to the aforementioned objects and other objects not described herein will be clearly understood by those skilled in the art from the following description. The scope of the present invention is set out in the claims.

According to the invention, the discharge grille has a plurality of vanes which are disposed at the discharge port and are spaced apart from each other, and when viewed from top, overlap each other to cover the discharge port.

In a preferred embodiment of the invention, the discharge grille may comprise a lower grille and an upper grille. The upper vanes of the upper grille cover the top of the discharge area of the lower grille, thereby minimizing scattering of droplets to the indoor space while minimizing resistance of the discharged air.

The upper vanes and the lower vanes may be arranged in a zigzag pattern in a vertical direction, thereby minimizing scattering of droplets along with the air to the indoor space.

When viewed from top, the upper vanes and the lower vanes overlap each other, thereby covering the entire discharge port disposed at the upper side of the water tank.

In accordance with an aspect of the present invention, the above and other objects can be accomplished by providing a humidification and air cleaning apparatus according to claim 1, including: a water tank having a discharge port which is open toward an upper side; and a discharge grille disposed at the water tank and covering the discharge port, wherein the discharge grille has a plurality of vanes which are disposed at the discharge port and are spaced apart from each other, and when viewed from top, overlap each other to cover the discharge port.

The discharge grille may include a lower grille disposed inside the water tank and covering the discharge port, and an upper grille disposed above the lower grille.

Preferably, the upper grille may have a plurality of upper vanes forming first discharge areas; a lower grille may have a plurality of lower vanes forming second discharge areas.

Preferably, the upper vanes may be disposed over the second discharge area, and when viewed from top, cover the second discharge areas.

The lower vanes may be disposed below the first discharge areas, and when viewed from top, may cover the first discharge areas.

At least either the lower vanes or the upper vanes may be inclined with respect to a vertical direction

A direction of inclination of the lower vanes may intersect a direction of inclination of the upper vanes.

The plurality of upper vanes may be disposed radially with respect to a center of the upper grille.

The plurality of lower vanes may be disposed radially with respect to a center of the lower grille.

The plurality of upper vanes may be arranged in a circumferential direction with respect to the center of the upper grille; and the plurality of lower vanes may be arranged in a circumferential direction with respect to the center of the lower grille.

The upper grille may include: an upper inner frame having an upper grille water supply port formed at a center thereof; an upper outer frame being spaced apart from the upper inner frame and formed to surround the upper inner frame; the plurality of upper vanes connecting the upper upper inner frame and the upper outer frame; and second discharge areas formed between the plurality of upper vanes.

The center of the upper grille may be formed inside the upper inner frame, wherein the plurality of upper vanes and the second discharge areas may be disposed radially with respect to the center of the upper grille.

The lower grille may include: a lower inner frame having a lower grille water supply port formed at a center thereof; a lower outer frame being spaced apart from the lower inner frame and formed to surround the lower inner frame; the plurality of lower vanes connecting the lower inner frame and the lower outer frame; and the first discharge areas formed between the plurality of lower vanes.

A center of the lower grille may be formed inside the lower inner frame, wherein the plurality of lower vanes and the first discharge areas may be disposed radially with respect to the center of the lower grille.

The plurality of upper vanes may be disposed over the second discharge areas, and the plurality of lower vanes may be disposed below the first discharge areas, wherein when viewed from top, the plurality of upper vanes may cover the second discharge areas.

The discharge grille is detachably placed at the water tank.

The humidification and air cleaning apparatus may further include a top cover assembly configured to receive an operation signal from a user, wherein the top cover assembly may be detachably placed over the discharge grille and may be spaced apart from the plurality of upper vanes. This feature is presently not claimed.

The humidification and air cleaning apparatus may further include a holder, which is formed at the upper outer frame and on which the top cover assembly is placed, wherein the holder and the upper outer frame may form an installation groove, and the top cover assembly seated in the installation groove may be engaged with the upper outer frame in a horizontal direction. This feature is presently not claimed.

The top cover assembly may further have an operation water supply port through which water supplied from above passes, wherein the upper grille water supply port may be disposed below the operation water supply port, and the lower grille water supply port may be disposed below the upper grille water supply port. This feature is presently not claimed.

The discharge grille may include: an inner frame having a grille water supply port formed thereinside; an outer frame being spaced apart from the inner frame and formed to surround the inner frame; the plurality of vanes connecting the inner frame and the outer frame; and discharge areas formed between the plurality of vanes.

The plurality of vanes may be inclined with respect to a vertical direction; and when viewed from top, an upper end of any one of the vanes may overlap a lower end of an adjacent vane.

The discharge grille may include: an inner frame having a grille water supply port formed thereinside; an outer frame being spaced apart from the inner frame and formed to surround the inner frame; a connection frame connecting the inner frame and the outer frame; the plurality of vanes disposed between the inner frame and the outer frame and formed to surround the inner frame; and discharge areas formed between the plurality of vanes.

When viewed from top, the respective vanes may form a concentric circle.

The humidification and air cleaning apparatus of the present invention has one or more of the following effects.

Firstly, in the present invention, the discharge grille has a plurality of vanes which are disposed at the discharge port and are spaced apart from each other, and when viewed from top, overlap each other to cover the discharge port thereby minimizing scattering of droplets to the indoor space while minimizing resistance of the discharged air.

Secondly, the upper vanes of the upper grille preferably cover the top side of the discharge area of the lower grille, thereby minimizing scattering of droplets to the indoor space while minimizing resistance of the discharged air.

Thirdly, the upper vanes and the lower vanes are preferably arranged in a zigzag pattern in a vertical direction, thereby minimizing scattering of droplets along with the air to the indoor space.

Fourthly, when viewed from top, the upper vanes and the lower vanes overlap each other, thereby covering the entire discharge port disposed at the upper side of the water tank.

Fifthly, an included angle is formed between the first inclined portion and the second inclined portion of the vanes, such that an air passage may be bent, thereby preventing the scattered droplets from directly passing through the discharge grille.

Sixthly, in the discharge grille of the present invention, an open discharge area is formed at each of the upper grille and the lower grille, thereby minimizing friction noise resulting from friction with air.

Seventhly, the discharge grille of the present invention has low friction with the discharged air, thereby providing the same air volume with less power consumption.

### BRIEF DESCRIPTION OF THE DRAWINGS

FIG. 1 is a perspective view of a humidification and air cleaning apparatus according to a first embodiment of the present invention.
FIG. 2 is an exploded perspective view of FIG. 1.
FIG 3 is a front cross-sectional view of FIG 2
FIG. 4 is a perspective view of an air wash module of FIG. 2, from which a top cover assembly is separated.
FIG. 5 is an isolated perspective view of a top cover assembly and discharge vanes of FIG. 4.
FIG 6 is a front view of FIG 5
FIG. 7 is a cross-sectional view taken along line A-A of FIG. 6.
FIG. 8 is an exploded perspective view of the top cover assembly of FIG. 5, from which an upper operation housing is separated.
FIG. 9 is a perspective view of FIG. 8 when viewed from bottom.
FIG. 10 is a perspective view of discharge vanes illustrated in FIG. 4.
FIG. 11 is an exploded perspective view of FIG. 10.
FIG. 12 is a plan view of FIG. 10.
FIG. 13 is a plan view of an upper grille illustrated in FIG. 11.
FIG. 14 is a plan view of a lower grille illustrated in FIG. 11.
FIG. 15 is across-sectional view of a connection structure of a discharge grille and a water supply cap of FIG. 6.
FIG. 16 is a perspective view of discharge vanes of a second embodiment of the invention.
FIG. 17 is a partially sectional perspective view of FIG. 16.
FIG. 18 is a perspective view of vanes of FIG. 17.
FIG. 19 is a perspective view of a discharge grill of a third embodiment of the present invention.
FIG. 20 is a partial front cross-sectional view of FIG. 19.
FIG. 21 is a perspective view of a discharge grille of a fourth embodiment of the invention.
FIG. 22 is a partial front cross-sectional view of FIG. 21.
FIG. 23 is a perspective view of a discharge grille of a fifth embodiment of the invention.
FIG. 24 is a partial front cross-sectional view of FIG. 23.
FIG. 25 is diagram illustrating a graph for comparing an air volume and noise between a humidification and air cleaning apparatus according to the first embodiment of the present invention and a general air purifier.
FIG. 26 is diagram illustrating a graph for comparing an air volume and power consumption between a humidification and air cleaning apparatus according to the first embodiment of the present invention and a general air purifier.

### DETAILED DESCRIPTION OF THE PREFERRED EMBODIMENTS

Advantages and features of the present invention will be more clearly understood from exemplary embodiments described below with reference to the accompanying drawings. However, the present invention is not limited to the following embodiments but may be implemented in various different forms as long as within the scope defined in the claims. The embodiments are provided only to complete disclosure of the present invention and to fully provide a person having ordinary skill in the art to which the present disclosure pertains with the category of the present disclosure, and the present invention will be defined by the scope of the appended claims. Wherever possible, like reference numerals generally denote like elements through the specification.

Hereinafter, embodiments the present invention will be described with reference to the accompanying drawings.

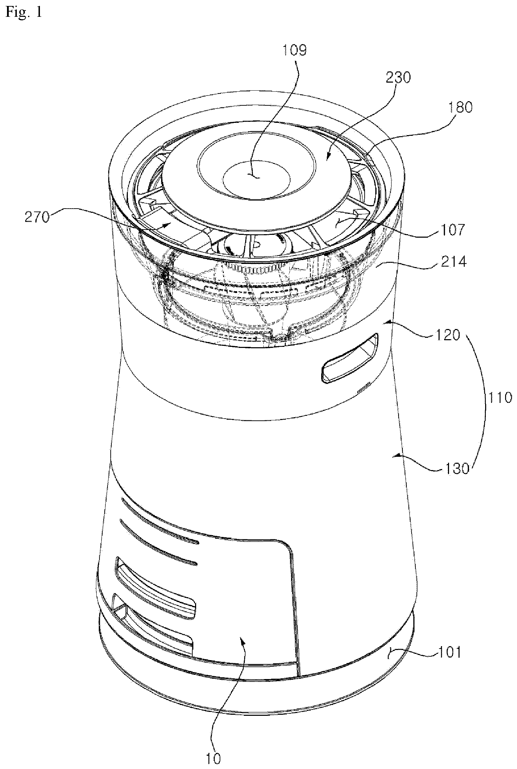

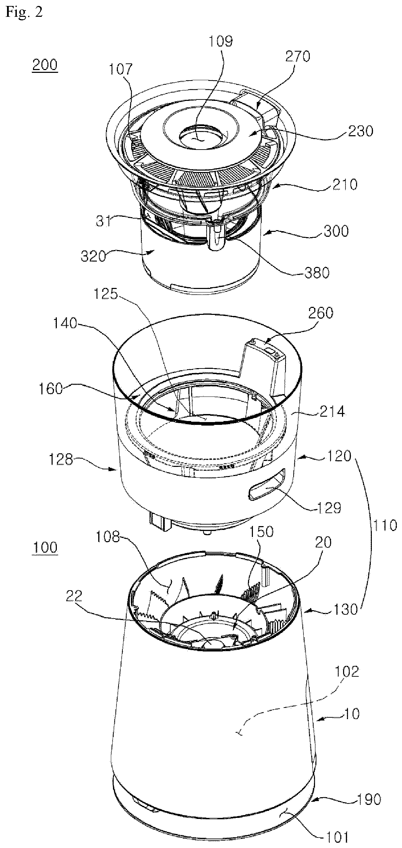

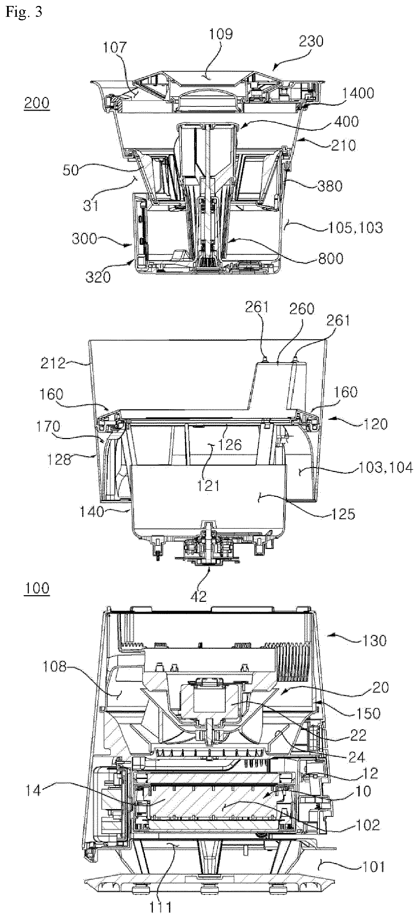

FIG. 1 is a perspective view of a humidification and air cleaning apparatus according to a first embodiment of the present invention; FIG. 2 is an exploded perspective view of FIG. 1; and FIG 3 is a front cross-sectional view of FIG 2

Referring to FIGS. 1 to 3, the humidification and air cleaning apparatus includes an air clean module 100 and an air wash module 200 placed over the air clean module 100.

The clean module 100 may take in and filter external air, and may provide filtered air to the air wash module 200. The air wash module 200 may be supplied with filtered air, may humidify the filtered air to provide moisture, and may discharge the humidified air to the outside.

The air wash module 200 may include a water tank 300 for storing water. The water tank 300may be separated from the air clean module 100 along with the air wash module 200 when the air wash module 200 is separated from the air clean module 100. The air wash module 200 is detachably placed over the air clean module 100.

A user may separate the air wash module 200 upward from the air clean module 100, and may easily clean the separated air wash module 200. Further, the user may clean the interior of the air clean module 100, from which the air wash module 200 is separated. When the air wash module 200 is separated, a top surface of the air clean module 100 is open to the user.

The air clean module 100 includes a filter assembly 10 which will be described later, and the user may clean the air clean module 100 after separating the filter assembly 10 from a base body 110.

The user may supply water into the air wash module 200. The air wash module 200 has a water supply passage 109, through which water may be supplied from the outside to the water tank 300.

The water supply passage 109 is formed separately from a discharge passage 109, through which air is discharged. Air to be discharged may be discharged through the discharge passage 107, and the discharge of air through the water supply passage 109 is minimized or blocked.

The water supply passage 109 may be formed such that water may be supplied into the water tank at any time. For example, even when the air wash module 200 is in operation, water may be supplied through the water supply passage 109. For example, even when the air wash module 200 is coupled to the air clean module 100, water may be supplied through the water supply passage 109. For example, even when the air wash module 200 is separated from the air clean module 100, water may be supplied through the water supply passage 109.

When water is supplied from above through the water supply passage 109, the water supplied from above may flow into the water tank 300 through the water supply passage 109 and the discharge passage 107.

The air clean module 100 and the air wash module 200 may be connected to each other by a connection passage 103. The air wash module 200 is separable, such that the connection passage 103 may be provided separately for the air clean module 100 and the air wash module 200. It is only when the air wash module 200 is placed over the air clean module 100 that a flow passage of the air wash module 200 and a flow passage of the air clean module 100 communicate with each other through the connection passage 103.

A connection passage formed at the air clean module 100 is defined as a clean connection passage 104, and a connection passage formed at the air wash module 200 is defined as a humidification connection passage 105.

Hereinafter, the air clean module 100 and the air wash module 200 will be described in further detail.

The air clean module 100 may include a base body 110, a filter assembly 10 disposed in the base body 110 and filtering air, and an air blower unit 20 disposed in the base body 110 and blowing air.

The base body 110 includes an upper body 120 and a lower body 130. The upper body 120 is stacked on top of the lower body 130, and the upper body 120 and the lower body 130 are assembled to each other.

Air may flow into the base body 110.

An intake passage 101 is disposed at a lower part of the lower body 130, and a filtering passage 102 is disposed inside the lower body 130, and an air blowing passage 108 is disposed at an upper part of the lower body 130.

In order to form the intake passage 101, a lower body supporter 190 is disposed which supports the lower body 130 from below. The filtering passage 102 is disposed in the lower body 130 and is disposed to pass through the filter assembly 10.

The air blowing passage 108 is disposed above the air blower unit 20. The filtered air, discharged from the air blower unit 20, flows into the water tank 300 through an air wash inlet 31.

The filter assembly 10 may be detachably assembled to the base body 110.

The filter assembly 10 provides the filtering passage 102, and filters outside air. The filter assembly 10 has a structure in which the filter assembly 10 may be detached from the base body 10 in a horizontal direction. The filter assembly 10 is disposed to intersect a flow direction of air that flows upstream in a vertical direction. The filter assembly 10 may slide in a horizontal direction, and may filter air that flows upstream in a vertical direction. The filter assembly 10 may be disposed in a horizontal direction, and may form the filtering passage 102 in a vertical direction.

The filter assembly 10 may slide in a horizontal direction with respect to the base body 110.

The air blower unit 20 is disposed above the filter assembly 10.

The air blower unit 20 generates an air flow. The air blower unit 20 is disposed inside the base body 110, and may allow air to flow from the lower side to the upper side.

The air blower unit 20 may include a blower housing 150, a blower motor 22, and a blower fan (not shown). In this embodiment, the blower motor 22may be disposed at an upper side of the air blower unit 20, and the blower fan may be disposed at a lower side thereof. The motor shaft of the blower motor 22 may be disposed to face downward, and may be coupled to the blower fan.

The blower housing 150 may be disposed inside the base body 110. The blower housing 150 may provide a flow passage of flowing air. The blower motor 22 and the blower fan are disposed in the blower housing 150.

The blower housing 150 is disposed above the filter assembly 10 and below the upper body 120.

The blower housing 150 may have the air blowing passage 108 formed therein. The blower fan is disposed in the air blowing passage 108. The air blowing passage 102 connects the filtering passage 102 and the clean connection passage 104.

The operating mechanism of the blower fan is similar to a centrifugal fan, but the blower fan has a discharge direction which is inclined upward. In this embodiment, the blower fan draws in air from below, and discharges the air outwardly and upwardly in a radial direction. An outer end of the blower fan may be disposed to face upward in a radial direction.

The blower motor 22 is disposed above the blower fan to minimize contact with the flowing air. The blower motor 22 may be installed so as to be covered by the blower fan. The blower motor 22 is not located in the air flow passage formed by the blower fan, and does not generate resistance to the air blown by the blower fan.

The upper body 120 forms an exterior of the base body 110, and may be assembled to the upper side of the lower body 130.

The air wash module 200 may be detachably held in the upper body 120.

The upper body 120 forms the exterior of the base body 110, and includes: an upper outer body 128 coupled to the lower body 130; an upper inner body 140 disposed inside the upper outer body 128, having the water tank 300 inserted therein, and providing the connection passage 103; and an air guide 170 connecting the upper inner body 140 and the upper outer body 128 and guiding air to the water tank 170.

A water tank insertion space 125 is formed in the upper inner body 140, and the water tank 300 of the air wash module 200 is detachably inserted into the water tank insertion space 125.

An outer side of the upper inner body 140 communicates with the air blowing passage 108. The upper inner body 140 has an upper inlet 121 passing through the inside and the outside of the upper inner body 140, and the upper inlet 121 corresponds to the air wash inlet 31. The air wash inlet 31 may be disposed inside the upper inlet 121.

The upper inlet 121 and the air wash inlet 31 may allow the inside of the water tank 300 and the air blowing passage 108 to communicate with each other. The upper inner body 140 has the water tank insertion space 125 so that the water tank 300 may be inserted therein.

As the upper body 120 is disposed to separate the connection passage and the water tank insertion space, it is possible to minimize a flow of water in the water tank 300 into the connection passage. Particularly, the connection passage, divided by the upper inner body 140, is disposed outside of a space in which water is stored, such that it is possible to suppress water from flowing into the connection passage.

The upper inner body 140 has an open upper side, through which the water tank 300 is inserted. The upper inner body 140 forms a portion of the clean connection passage 104, through which the filtered air flows.

The upper inner body 140 has the upper inlet 121 corresponding to the air wash inlet 31. The upper inlet 121 is not an essential component, and may have any shape as long as the upper body 120 may expose the air wash inlet 31 to the connection passage 103.

The air guide 170 guides air, supplied through the clean connection passage 104, to the upper inlet 121. The air guide 170 may collect air inwardly which rises along the outside of the base body 110. The air guide 170may change the flow direction of air flowing from the lower side to the upper side. However, while changing the flow direction of air, the air guide 170may minimize the flow resistance of air by minimizing an angle of change of the air flow direction.

The air guide 170 may cover the outside of the upper inner body 140 360 degrees of a circumference of the upper inner body 140. The air guide 170 may guide air to the water tank 300 in all directions of 360 degrees of the circumference of the water tank 300. The air guide 170may collect air inwardly which is guided along the outside of the lower body 130, and may supply the collected air to the water tank 300. In this structure, the flow rate of air supplied to the water tank 300 may be sufficiently secured.

A handle 129 may be formed at the upper body 120. As the air wash module 200 is held in the upper body 120, the whole humidification and air cleaning apparatus may be lifted up by the handle 129.

The clean connection passage (not shown) may be disposed on the outside of the upper inlet 121, and the water tank insertion space 125 is disposed on the inside. The air, flowing through the clean connection passage 104, passes through the upper inlet 121. When the water tank 300 is held in the water tank insertion space 125, the filtered air, having passed through the upper inlet 121, flows into the water tank 300.

An outer visual body 214 is coupled to the upper side of the upper body 214.

The outer visual body 214 is a component of a visual body 210, but in this embodiment, the outer visual body 214 is fixed to the upper body 120. Unlike this embodiment, the outer visual body 214 may also be fixed to the air wash module 200. Further, unlike this embodiment, the outer visual body 214 may be omitted.

The outer visual body 214 is fixed to the upper body 120. In this embodiment, the outer visual body 214 is coupled to the upper outer body 128. The outer visual body 214 and the outer surface of the upper outer body 128 may form a continuous surface.

The outer visual body 214 may be formed of a material, allowing a user to see the inside of the outer visual body 214. The outer visual body 214 may be formed of a transparent or translucent material.

A display module 160may be disposed at at least one of the air clean module 100 or the air wash module 200 to display an operating state to a user. In this embodiment, the display module 160may be disposed at the base body 110 to display an operating state of the humidification and air cleaning apparatus to a user.

The display module 160 is disposed on an inner surface the outer visual body 214. The display module 160 may be disposed to be closely adhered to the inner surface of the outer visual body 214. When viewed from top, the display module 169 has a donut shape. The water tank 300 is inserted into the display module 160.

The display module 160 may be supported by the outer visual body 214. The inner edge of the display module 160 is supported by an upper inner body ring 126. The display module 160 may be integrally formed with a base connector 260.

The inside of the display module 160 is supported by the upper inner body 140, and the outside thereof is supported by the outer visual body 218.

In this embodiment, when viewed from top, the display module 160 has a ring shape. Unlike this embodiment, the display module 160 may have an arc shape. The surface of the display module 160 may be formed of, or coated with, a light-reflective material.

Accordingly, when drops of water are formed on the visual body 210, the waterdrops formed on the visual body 210 may be projected onto or reflected from the surface of the display module 160. When the drops of water formed on visual body 210 flows down, the same effect is also shown on the display module 160.

This effect may give a visual stimulus to a user, such that the user may intuitively recognize that humidification is being performed. The waterdrop image projected on the display module 160 may have not only an emotional effect of giving a sense of refreshment to a user, but also a functional effect of informing the user of a humidification state.

The upper surface of the display module 160 is inclined. The display module 160 is inclined toward the user's side, such that the inner side of the display module 160 is disposed higher and the outer side is disposed lower.

A humidification connection passage 105 is disposed outside of a side wall of the water tank 300. The clean connection passage 104 may be disposed outside of the upper inner body 150.

Hereinafter, each component of the air wash module 200 will be described with reference to FIGS. 2 and 3.

The air wash module 200 includes: a water tank 300 storing water for humidification and detachably disposed on the air clean module 100; a watering unit 400 disposed in the water tank 300 and spraying water in the water tank 300; a humidification medium 50 wetted with water sprayed from the watering unit 400 and providing moisture to flowing air; a visual body 210 coupled to the water tank 300 and formed of a transparent material allowing a user to see the inside thereof; a top cover assembly 230 detachably disposed over the visual body 210 and providing the discharge passage 107, through which air is discharged, and the water supply passage 109 through which water is supplied; and a discharge vane 1400 disposed below the top cover assembly 230 and covering the discharge passage 107.

The air wash module 200 provides humidification to the filtered air. The air wash module 200 may implement a rain view inside the water tank 300. The air wash module 200 sprays and circulates water stored in the water tank 300. The air wash module 200 changes the stored water into small droplets, and the scattered droplets come into contact with the filtered air. Humidification and filtering are performed while the filtered air is washed with the scattered droplets.

The air wash module 200 includes the water tank 300, the watering unit 400, the humidification medium 50, the visual body 210, the top cover assembly 230, and the handle 180.

The handle 180 is connected to the visual body 210, rotates about the visual body 210, and is held in the visual body 210. A user may simply lift up only the air wash module 200 by the handle 180, and the handle 180 may be separated from the air clean module 100.

In the humidification and air cleaning apparatus according to this embodiment, a power source may be connected to the air clean module 100, and the air wash module 200 may be supplied with power from the air clean module 100.

As the air wash module 200 may be separated from the air clean module 100, a separate power supply structure is provided in which power is provided separately to the air clean module 100 and the air wash module 200.

The air clean module 100 and the air wash module 200 are detachably assembled in the upper body 120, such that the base connector 260 for providing power to the air wash module 200 may be disposed in the upper body 120.

An operation module 240, which requires power, is disposed at the top cover assembly 230 of the air wash module 200. A top connector 270, detachably connected to the base connector 260, is disposed in the air wash module 200. The top connector 270 is disposed in the top cover assembly 230.

In this embodiment, the top cover assembly 230 may be separated such that the user may clean the inner surface of the visual body 210 or the inner surface of the water tank 300 in a convenient manner.

The top cover assembly 230 may be detachably installed to the visual body 210. The top cover assembly 230 is provided with the top connector 270 which is electrically connected to the base connector 260.

When the top cover assembly 230 is placed, the top connector 270 is disposed above the base connector 260. The top cover assembly 230 is supplied with electricity from the base connector 260 via the top connector 270.

A water level display unit 247 for displaying a water level of the water tank 300 is disposed near the water supply passage 109. Accordingly, while supplying water, a user may check the water level of the water tank 300 which is not visible. By providing the water level display unit 247 at an appropriate position to be seen by a user while the user supplies water, it is possible to prevent excessive supply of water by the user or prevent overflow of water from the water tank 30.

The water level display unit 247 is disposed at the top cover assembly 230. A separate power supply structure of the top connector 270 and the base connector 260 may allow effective supply of water from above.

The water tank 300 is detachably disposed in the upper body 120. The watering unit 400 is disposed and rotates inside the water tank 300.

The water tank 300 includes: a water tank body 320in which water is stored; the air wash inlet 31 formed to pass through a side wall of the water tank body 320; and a water tank body extension part 380 extending upward from the water tank body 320 and coupled to the visual body 210.

The water tank body 320 has a bottom surface and a side wall, with an open upper part. The air wash inlet 31 passes through the side wall. In this embodiment, the water tank body 320 is formed in a cylindrical shape with an open upper part. Unlike this embodiment, the water tank body 320 may be formed in various shapes.

The water tank body extension part 380 may extend upward from the water tank 300. The water tank body extension part 380 may form the air wash inlet 31. The air wash inlet 31 may be formed between the water tank body extension parts 380.

The air wash inlet 31 may be formed to pass through the side surface of the water tank body 320. The air wash inlet 31 may be formed in all directions of 360 degrees with respect to the water tank body 320.

The water tank body extension part 380 guides water, flowing down from the inner surface of the visual body 210, into the water tank 300. By guiding water flowing down from the visual body 210, noise of dropping water may be minimized.

The water tank body extension part 380 is coupled to a lower end of the visual body 210.

In this embodiment, the visual body 210 and the water tank 300 are manufactured separately and assembled afterwards. Unlike this embodiment, the visual body 210 and the water tank 300 may be integrally formed or the water tank 300 may be included in the visual body 210 as a component.

For example, a portion of the water tank 300 may be formed of a transparent material by bi-injection molding, in which case the visual body 210 is not manufactured as a separate component.

In this embodiment, the air wash inlet 31 is formed data component of the water tank body 320. Unlike this embodiment, the air wash inlet 31 may also be formed by providing the water tank body extension part 380 in the visual body 210.

Further, unlike this embodiment, the air wash inlet 31 may be formed in such a manner that some of a plurality of water tank body extension parts 380are disposed in the water tank 380 and the other are disposed in the visual body 210. In addition, unlike this embodiment, the air wash inlet 31 may be formed at a separate component which is distinguished from the visual body 210 and the water tank 300. Moreover, unlike this embodiment, the visual body 210 may have an apertured surface, on which the air wash inlet 31 may be formed, and the water tank 300 may also have an apertured surface on which the air wash inlet 31 may be formed.

That is, the air wash inlet 31 may be formed on at least one of the water tank 300 or the visual body 210. The air wash inlet 31 may be formed by coupling of the water tank 300 and the visual body 210. Upon providing the air wash inlet 31 at a component which is distinguished from the water tank 300 and the visual body 210, the component may be disposed between the water tank 300 and the visual body 210. The air wash inlet 31 may be formed by the coupling of the water tank 300 and the visual body 210.

The visual body 210 has an upper part and a lower part which are open. When viewed from top, the open upper part and the open lower part of the visual body 210 have a circular shape.

A diameter of the lower opening of the visual body 210 is smaller than a diameter of the upper opening of the visual body 210.

In this embodiment, the top cover assembly 230 is inserted through the upper opening of the visual body 210, and is detachably disposed on the inner surface of the visual body 210.

The watering unit 400 has a function of supplying water to the humidification medium 50. The watering unit 400 has a function of visualizing the humidification process. The watering unit 400 implements a rain view inside the air wash module 200.

The watering unit 400 draws in water stored in the water tank 300 by rotating the watering housing 800, pumps upward the drawn water, and sprays the pumped water outwardly in a radial direction. The watering unit 400 includes the watering housing 800 which draws in water, pumps upward the drawn water, and then sprays the pumped water outwardly in a radial direction.

In this embodiment, the water housing 800 rotates to spray water. Unlike this embodiment, a nozzle may be used instead of the watering housing 800 to spray water. As water is sprayed from the nozzle, the water may be supplied to the humidification medium 50 and a rain view may also be similarly implemented. Depending on embodiments, water may be sprayed from the nozzle or the nozzle may rotate.

The water sprayed from the watering housing 800 serves to wet the humidification medium 50. The water sprayed from the watering housing 800 may be sprayed toward at least one of the visual body 210 or the humidification medium 50.

Water sprayed toward the visual body 210 may be used to implement a rain view. Water sprayed toward the humidification medium 50 may be used to humidify the filtered air. The rain view may be implemented by spraying water toward the visual body 210, and then water flowing down from the visual body 210 may be used to wet the humidification medium 50.

In this embodiment, a plurality of nozzles having different heights may be disposed on the watering housing 800. Water discharged from any one nozzle may form droplets on the inner surface of the visual body 210 to implement a rain view, and water discharged from the other nozzle may wet the humidification medium 50 for use in humidification.

The watering housing 800may spray water to the inner surface of the visual body 210, and the sprayed water may flow down along the inner surface of the visual body 210. Droplets, shown in the form of drops of water, may be formed on the inner surface of the visual body 210, and a user can see the droplets through the visual body 210.

Particularly, water flowing down from the visual body may wet the humidification medium 50 for use in humidification. The humidification medium 50 may be wetted with water sprayed from the watering housing 800 and water flowing down from the visual body 210.

The visual body 210 may be coupled to the water tank 300, and may be disposed above the water tank 300. At least a portion of the visual body 210 may be formed of a material, allowing a user to see the inside thereof.

A display module 160 may be disposed outside of the visual body 210. The display module 160 may be coupled to either one of the visual body 210 or the upper body 120.

The display module 160 may be disposed at a position where the rain view may be observed. In this embodiment, the display module 160 may be disposed at the upper body 120.

When the air wash module 200 is placed, an outer surface of the visual body 210 is closely adhered to the display module 160. At least a portion of the surface of the display module 160 may be formed of or coated with a light-reflective material.

The droplets formed on the visual body 210 may also be projected onto the surface of the display module 160. Accordingly, a user can observe the motion of droplets at both the visual body 210 and the display module 160.

The water tank 300 may have the air wash inlet 31 through which air passes. The air wash inlet 31 may be provided between the connection passage 103 and a humidification passage 106. The air wash inlet 31 may be an outlet of the connection passage 103 and an inlet of the humidification passage 106.

The filtered air, supplied from the air clean module 100, may flow into the air wash module 200 (water tank in this embodiment) through the air wash inlet 31.

The humidification medium 50 may be disposed at the air wash inlet 31 and may cover the air wash inlet 31.

The humidification medium 50 may be disposed on at least one of the following positions: on the same plane of the air wash inlet 31, or on the outside or the inside of the air wash inlet 31.A water tank humidification medium 51 is wetted with water for humification, such that the water tank humification medium 51 is desirably disposed on the inside of the air wash inlet 31. That is, the humification medium 50 is desirably disposed on the inside of the water tank 300.

Water flowing down after wetting the humidification medium 50 is stored in the water tank 300. The humidification medium 50 humidifies the filtered air passing through the air wash inlet 31.

The filtered air is humidified by water naturally evaporated from the humidification medium 50. The natural evaporation means that water evaporates in a state where separate heat is not applied to the water. The natural evaporation may be promoted as contact with air increases, the flow velocity of air increases, and the pressure in the air decreases. The natural evaporation may also be referred to as natural vaporization.

The humidification medium 50 may promote the natural evaporation of water. In this embodiment, the humidification medium 50 is wetted with water but is not immersed in the water tank 300.

The humidification medium 50 is spaced apart from the water stored in the water tank 300, such that even when water is stored in the water tank 300, the humidification medium 50 is not always in a wet state. That is, the humidification medium 50 is in a wet state only during the operation of a humidification mode, and during the operation of an air cleaning mode, the humidification medium 50 may be maintained in a dry state.

The humidification medium 50 covers the air wash inlet 31, and the filtered air may pass through the humidification medium 50 to flow into the water tank 300. As the filtered air passes through the air wash inlet 31, an air flow length may be minimized.

The top cover assembly 230 forming the discharge passage 107 will be described below.

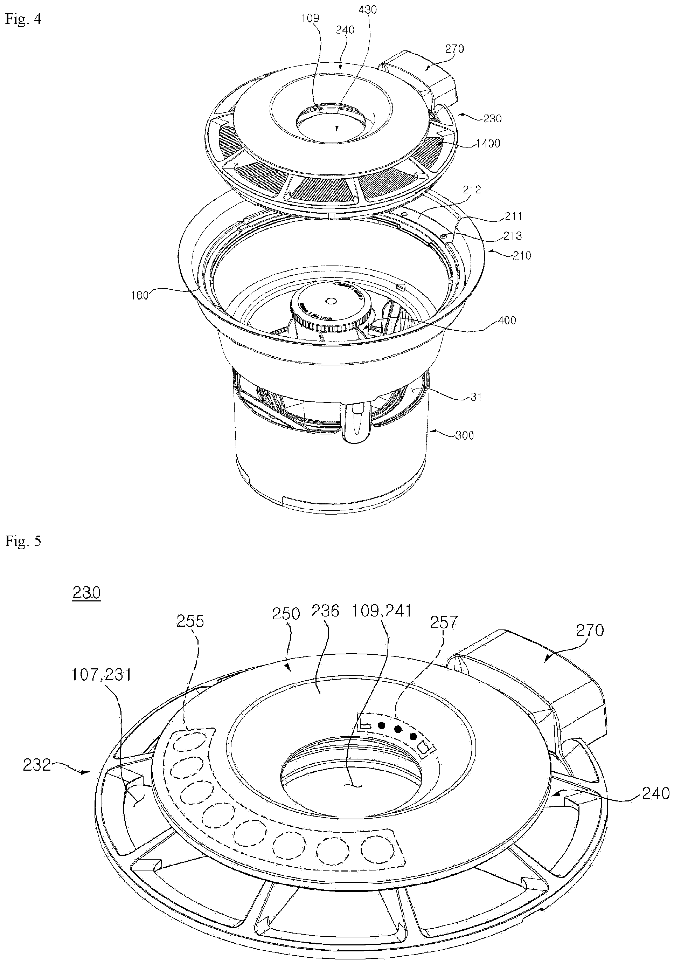

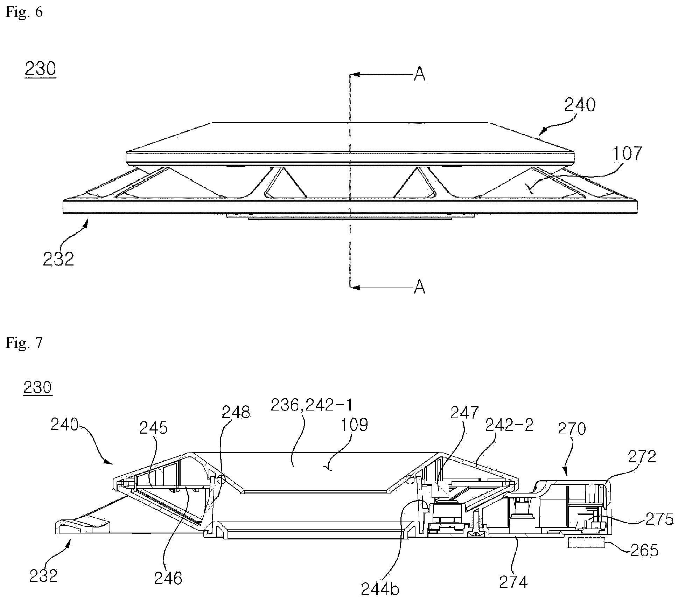

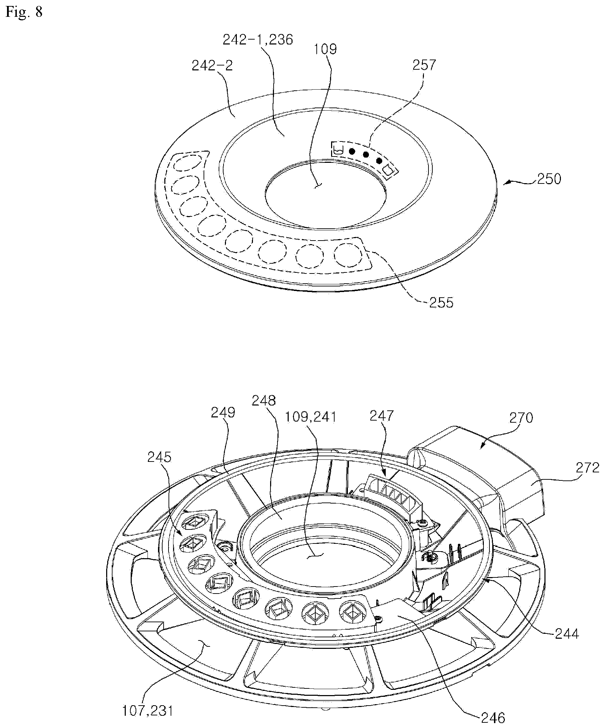

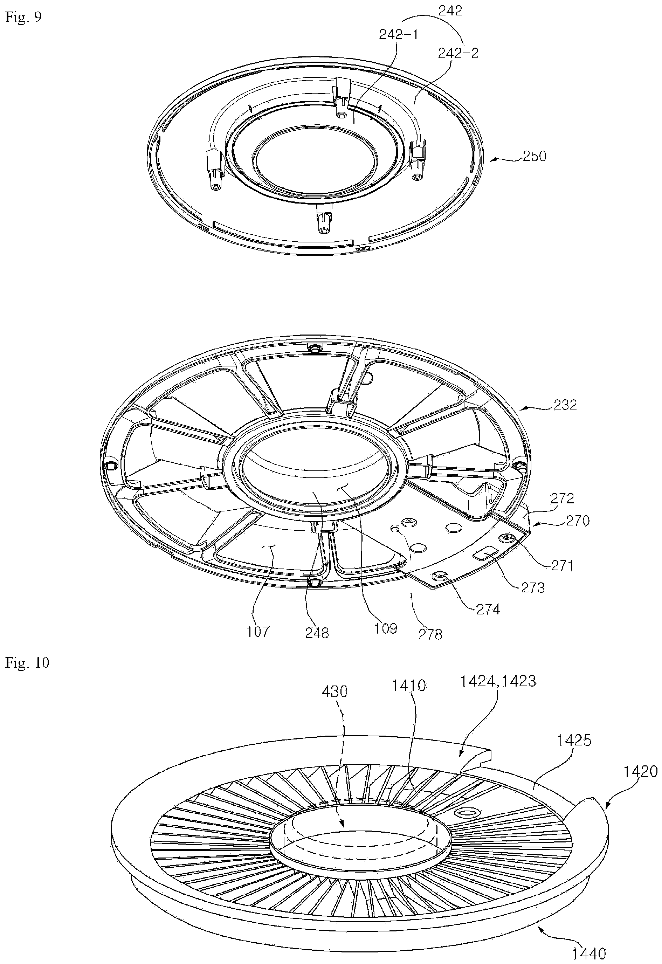

FIG. 4 is a perspective view of an air wash module of FIG. 2, from which a top cover assembly is separated; FIG. 5 is an isolated perspective view of a top cover assembly and discharge vanes of FIG. 4; FIG. 6 is a front view of FIG. 5; FIG. 7 is a cross-sectional view taken along line A-A of FIG. 6; FIG. 8 is an exploded perspective view of the top cover assembly of FIG. 5, from which an upper operation housing is separated; and FIG. 9 is a perspective view of FIG. 8 when viewed from bottom.

Referring to FIGS. 4 to 9, a configuration of the top cover assembly 230 will be described below.

In this embodiment, the top cover assembly 230 is placed over the visual body 210, but unlike this embodiment, if the visual body 210 is integrally formed with the water tank 300, the top cover assembly 230 may be disposed at an open upper part of the water tank 300.

In this embodiment, the top cover assembly 230 may be detachably placed over the visual body 210. The top cover assembly 230 provides not only the discharge passage 107, but also the water supply passage 109 for supplying water.

The top cover assembly 230 is disposed above the discharge grille 1400 (the discharge grille 1400 maybe also called discharge vane) with the vanes. In this embodiment, the discharge grille 1400 are disposed at the open upper part of the visual body 210, and is detachably disposed on the inner surface of the visual body 210. Further, the top cover assembly 230 may be disposed above the discharge grille 1400.

The top cover assembly 230 may be integrally assembled with the discharge grille 1400. In this embodiment, after the top cover assembly 230 and the discharge grille 1400 are manufactured separately, the discharge grille 1400 and the top cover assembly 230 may be stacked on top of each other in a vertical direction.

In this embodiment, the top cover assembly 230 is disposed above the discharge grille 1400, and is not placed on the discharge grill 1400 but on the visual body 210. That is, the discharge grille 1400 and the top cover assembly 230 each may be detachably disposed on the inner surface of the visual body 210.

The top cover assembly 230 may be placed on the visual body 210 and is supported thereby, without applying load to the discharge vanes 1400.

The top cover assembly 230 may be disposed at the open upper part of the visual body 210. The top cover assembly 230 may include: a top cover grille 232 forming the discharge passage 107 and the water supply passage 109; an operation module 240 installed at the top cover grille 232; and the top connector 270 providing power or signals to the operation module 240.

The top cover grille 232 may include a grille discharge port 231, forming at least a portion of the discharge passage 107, and a grille water supply port forming at least a portion of the water supply passage 109. The grille discharge port 231 and the grille water supply port 233 are open in a vertical direction. The grille water supply port 233 may be disposed at the center of the inside of the top cover grille 232, and the grill discharge port 231 may be disposed outside of the grill water supply port 232.

The top cover grille 232 may be detachably placed on the visual body 210. The top cover grille 232 may be placed on the inner surface of the visual body 210.

The operation module 240 is coupled to the top cover grille 232. The operation module 240 may receive control signals from a user. The operation module 240 may transmit water level information to a user. The water supply passage 109 may be disposed in the operation module 240. The operation module 240 may be electrically connected to the top connector 270, and may be supplied with power from the top connector 270.

The operation module 240 includes an operation housing 250 coupled to the discharge grille 232 and having at least a portion of the water supply passage 109 formed therein, an operation space 243 formed inside the operation housing 250, an input unit 245 disposed on the operation housing 250, the water level display unit 247 disposed on the operation housing 250, and an operation controller 246 controlling the input unit 245 and the water level display unit 247.

The operation housing 250 includes an upper operation housing 242 and a lower operation housing 244.

The operation space 243 is formed between the upper operation housing 242 and the lower operation housing 244, and the operation space 243 is sealed to prevent water from entering. The input unit 245, the water level display unit 247, and the operation controller 246 are disposed in the operation space 243.

The water supply passage 109 is formed in the operation module 240. A portion of the water supply passage 109 is vertically formed at the center of the operation module 240. An operation water supply port 241, forming at least a portion of the water supply passage 109, may be formed in the operation module 240. The operation water supply port 241 may be disposed inside the operation housing 250, and may be open in a vertical direction.

The operation water supply port 241 is formed by an inner wall 248. The inner wall 248 may be disposed on at least one of the upper operation housing 242 and the lower operation housing 244. In this embodiment, the lower operation housing 244 is integrally formed with the inner wall 248. Unlike this embodiment, the upper operation housing 242 may be integrally formed with the inner wall 248, such that the operation space 243 may be formed between the upper operation housing 242, the lower operation housing 244, and the inner wall 248.

An upper water supply guide 236 for guiding water, supplied from above, into the operation water supply port 241 may be disposed in the upper operation housing 242. The upper water supply guide 236 may be manufactured as a separate component, or a portion of the surface of the upper operation housing 242 may be used to form the upper water supply guide 236 thereon.

The upper operation housing 242 according to this embodiment includes an inner inclined surface 242-1 and an outer inclined surface 242-2.

An inner surface of the upper operation housing 242, disposed adjacent to the operation water supply port 241, may be inclined to form the upper water supply guide 236 thereon.

A direction of inclination of the outer inclined surface 242-2 is opposite to that of the upper water supply guide 236. While the inner inclined surface 242-1 is inclined toward the operation water supply port 241, the outer inclined surface 242-2 is inclined outwardly.

The input unit 245 may be a touch panel for sensing a user's touch operation. The input unit 245 may receive input of a user's touch operation using capacitive sensing or static pressure sensing. Unlike this embodiment, the input unit 245 may be a button.

The input unit 245 is disposed on a bottom surface of the upper operation housing 242. The input unit 245 may be provided with a light emitting member (not shown), and light may be selectively emitted from the light emitting member.

For example, if it is required to receive a user's operation signal, the input unit 245 may emit light. For example, if a user needs to recognize an operation signal input by the user, the input unit 245 may emit light. Further, when the humidification and air cleaning apparatus is operated according to an operation signal input by the user, the input unit 245 may emit light.

The surface of the upper operation housing 242 may be coated with a material, through which light may be selectively transmitted. Accordingly, light emitted from the input unit 245 may be transmitted through the upper operation housing 242, and may be seen by a user. When light is not emitted from the input unit 245, external light is reflected from the surface of the upper operation housing 242, and the user may not identify the position of the input unit 245.

The input unit 245 is disposed at a lower side of the outer inclined surface 242-2. The water level display unit 247 is disposed at a lower side the inner inclined surface 242-1.

The input unit 245, the operation water supply port 241, and the water level display unit 247 may be disposed on a straight line. Particularly, the input unit 245, the operation water supply port 241, and the water level display unit 247 may be disposed on a straight line when seen from a user's viewpoint.

The input unit 245 may be disposed at the front, the operation water supply port 241 may be disposed behind the input unit 245, and the water level display unit 247 may be disposed behind the operation water supply port 241.

Accordingly, when a user supplies water from above, the user may check the water level display unit 247 while pouring water into the operation water supply port 241.

The operation housing 250 has an input unit display area 255, on which the input unit 245 is displayed, and a water level display area 257 on which the water level unit 247 is displayed.

The inner inclined surface 242-1 and the outer inclined surface 242-2 are inclined in opposite directions with respect to the operation water supply port 241, but may be inclined in the same direction when seen from a user's viewpoint.

The input unit display area 255 is provided on the outer inclined surface 242-2, and the water level display area 257 is provided on the inner inclined surface 242-1. The input unit display area 255 and the water level display area 257 may be inclined in the same direction when viewed from a user's viewpoint.

The input unit display area 255 and the water level display area 257 may be inclined forwardly.

The operation controller 246 may sense a signal of the input unit 245, analyzes the signal of the input unit 245, and transmits the analyzed signal to a controller (not shown). The controller may be disposed in the based body 110.

The input unit 245 may be hidden in the upper operation housing 242, and light may be emitted from the input unit 245 only while the input unit 245 is in operation, such that a user may identify the position of the input unit 245. The input unit 245, the water level display unit 247, and the operation controller 246 may be supplied with power from the base connector 260.

The operation space 243 is sealed to prevent water from entering. To this end, a gasket 249 is interposed between the upper operation housing 242 and the lower operation housing 244.

The operation housing 250 and the top connector 270 are manufactured separately and then are assembled. In this embodiment, the operation controller 246 and the top connector 270 may be connected through the lower operation housing 244. A connector connection hole 244 for connection with the top connector 270 may be formed at the lower operation housing 244.

A portion of the top connector 270 is inserted by passing through the connector connection hole 244b, and is electrically connected to components inside the operation space 243. As the top connector 270 is connected through the lower operation housing 244, a sealing structure may be easily provided. Even when water flows down the outer inclined surface 242-2, it is possible to prevent water from passing through the connector connection hole 244b.

The top connector 270 is assembled with the operation module 240 to form the top cover assembly 230. The top connector 270 and the base connector 260 may be separated from each other, such that the top cover assembly 230 may be detachably placed on the visual body 210, and may transmit and receive power or electric signals to and from the base body 110.

When the top connector 270 is placed over the base connector 260, the top connector 270 is electrically connected to the base connector 260; and when the top connector 270 is separated from the base connector 260, the top connector 270 is electrically disconnected from the base connector 260.

The top connector 270 may be placed over the base connector 260 without any separate structure. For example, when the top cover assembly 230 is placed on the visual body 210, the top connector 270 and the base connector 260 may be disposed on the outer side of the visual body 210.

In this embodiment, the top connector 270 is disposed on the inner side the visual body 210, such that the top connector 270 is disposed at an upper part of the visual body 210, and the base connector 260 may be disposed at a lower part of the visual body 210.

That is, the top connector 270 and the base connector 260 may be separated from each other with respect to the visual body 210serving as a boundary. Accordingly, the top connector 270 and the base connector 260 are required to transmit power and signals through the visual body 210.

In this embodiment, the top connector 270 and the base connector 260 are electrically connected by direct contact, in which power may be supplied thereto.

In this embodiment, the top connector 270 and the base connector 260 transmit signals by wireless communication. Unlike this embodiment, communication signals may also be transmitted by direct contact therebetween.

The visual boy 210 has a connector support 212, on which the top connector 270 is placed. At least a portion of the top connector 270 is placed on the connector support 212. The top connector 270 is placed on the connector support 212, and the base connector 260 is disposed below the connector support 212.

When the top connector 270 is placed on the connector support 212, its horizontal movement is restricted. To this end, the visual body 210 has a connector stopper 211 for limiting a horizontal movement of the top connector 270. When the top connector 270 is placed, the connector stopper 211 is closely adhered to a side portion of the top connector 270.

The visual body 210 has a connector opening 213. The connector opening 213 may be formed to pass through the visual body 20. The connector opening 213 is open in a vertical direction.

The connector opening 213 and the connector support 212 may be disposed at different positions. In this embodiment, the connector opening 213 is formed at the connector support 212. A portion of the connector support 212 is open to form the connector opening 213.

A first connector electrode 261 may be disposed in at least any one of the top connector 270 and the base connector 260, and a second connector electrode 271 may be dispose in the other thereof.

The first connector electrode 261, disposed in any one of the top connector 270 and the base connector 260, passes through the connector opening 213 to come into contact with the second connector electrode 271 disposed on the other thereof.

While in contact with each other, the first connector electrode 261 and the second connector electrode 271 are electrically connected to each other, and when separated from each other, the first connector electrode 261 and the second connector electrode 271 are electrically disconnected from each other.

In this embodiment, the first connector electrode 261 is disposed in the base connector 260, and the second connector electrode 271 is disposed in the top connector 270. Unlike this embodiment, the first connector electrode 261 may be disposed in the top connector 270, and the second connector electrode 271 may be disposed in the base connector 260.

The top connector 270 has a top connector housing 272 and a top connector cover 274. In this embodiment, the top connector housing 272 is integrally formed with the top cover grille 232. Unlike this embodiment, the top connector housing 272 may be manufactured separately, and then may be assembled to the top cover grille 232.

The top connector housing 272 has an open lower surface. The top connector cover 274 is assembled to the top connector housing 272 and covers a bottom surface of the top connector housing 272.

The base connector 260 and the top connector 270 may communicate with each other to transmit electric signals, except power, in a contactless manner. Various communication modules may be used for wireless communication between the base connector 260 and the top connector 270.

The base connector 260 and the top connector 270 are located adjacent to each other, such that IR, Zigbee, NFC, Bluetooth, etc., which are appropriate for local area network may be used.

In this embodiment, the base connector 260 and the top connector 270 communicate with each other via an infrared (IR) signal. In order to transmit the IR signal, the connector support 212 is required to be formed of a material for the signal to pass therethrough. In this embodiment, the connector support 212 is formed of a transparent material. As the entire visual body 210 is formed of a transparent material allowing light to be transmitted therethrough, a separate material only for the connector support 212 is not required.

The base connector 260 has a base connector window 263 through which the IR signal may be transmitted. The top connector 270 has a top connector window 273 through which the IR signal may be transmitted.

A top connector communicator 275 is disposed at an upper side of the top connector window 273. A base connector communicator 265 is disposed at a lower part of the based connector window 263.

A signal, transmitted from the top connector communicator 275, may be sent to the base connector communicator 265 via the top connector window 273, the connector support 212, and the base connector window 263.

By contrast, a signal, transmitted from the base connector communicator 265, may be sent to the top connector communicator 275 via the base connector window 263, the connector support 212, and the top connector window 273.

The signal, transmitted from the top connector communicator 275 to the base connector communicator 265, may be a user's operation signal input to the operation module 240. The signal, transmitted from the base connector communicator 265 to the top connector communicator 275, may be a signal for controlling the water level display unit 247.

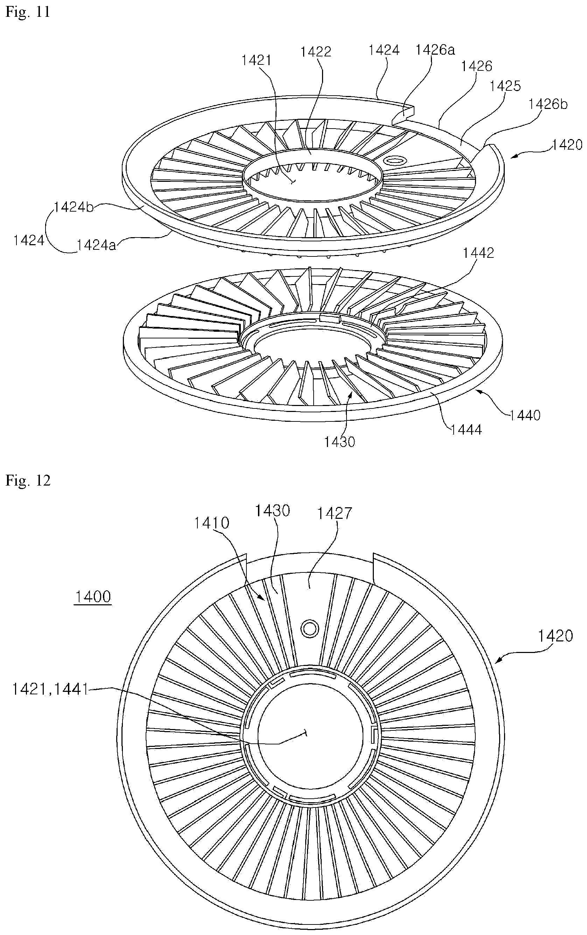

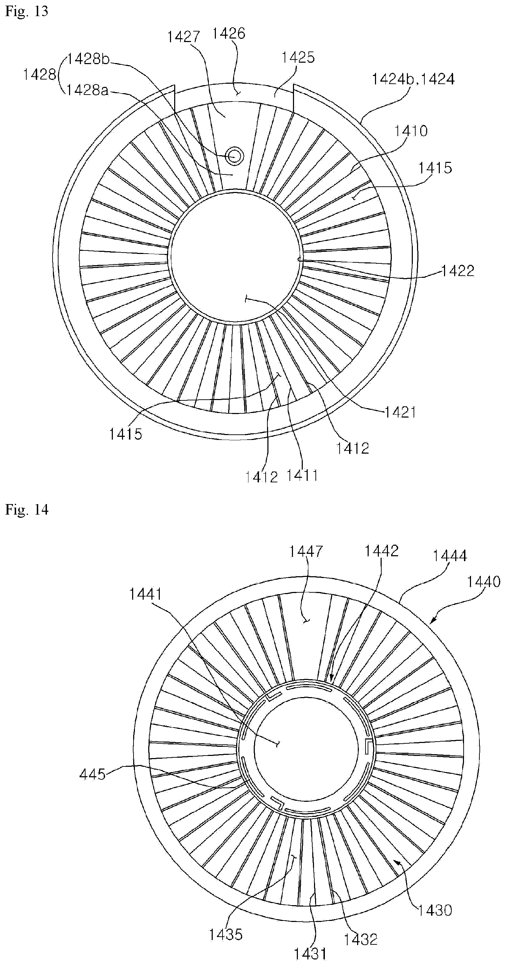

FIG. 10 is a perspective view of discharge vanes illustrated in FIG. 4. FIG. 11 is an exploded perspective view of FIG. 10. FIG. 12 is a plan view of FIG. 10. FIG. 13 is a plan view of an upper grille illustrated in FIG. 11. FIG. 14 is a plan view of a lower grille illustrated in FIG. 11.

The discharge grille 1400 according to this embodiment has vanes in a first layer and vanes in a second layer, the vanes being vertically arranged in a staggered manner, thereby preventing the water tank 300 from being directly seen through the grille discharge port 231.

The discharge grille 1400 is disposed at a lower part of the top cover assembly 230. The discharge grille 1400 discharges air, while minimizing direct discharge of droplets into an indoor space. The discharge grille 1400 covers the open upper side of the visual body 210.

The discharge grille 1400 is disposed below the grille discharge port 231 and minimizes discharge of droplets to the grille discharge port 231.

Fine droplets may flow with air to be discharged through the grille discharge port 231. The discharge grille 1400 may prevent droplets from being scattered upward in a vertical direction through the grille discharge port 231.

The discharge grille 1400 has an upper grille 1420, on which a plurality of upper vanes 1410 are disposed, and a lower grille 1440 which is disposed below the upper grille 1420 and coupled to the upper grille 1420 and on which a plurality of lower vanes 1430 are disposed.

The upper grille 1420 and the lower grille 1440 are assembled to be integrally formed with each other. In this embodiment, the lower grille 1440, disposed below the upper grille 1440, is placed on the visual body 210.

The upper grille 1420 includes an upper inner frame 1422 having an upper grille water supply port 1421 formed at the center thereof, an upper outer frame 1424 being spaced apart from the upper inner frame 1422 and formed to surround the upper inner frame 1422, and the plurality of upper vanes 1410 connecting the upper inner frame 1422 and the upper outer frame 1424.

The upper inner frame 1422 and the upper outer frame 1424 may be formed in various shapes. In this embodiment, the upper inner frame 1422 and the upper outer frame 1424 are formed in a ring shape. A diameter of the upper outer frame 1424 is larger than a diameter of the upper inner frame 1422.

The upper outer frame 1424 has a holder 1425 on which the top connector 270 is placed. The holder 1425 may be formed to be flat. Particularly, a bottom surface of the top connector cover 274 of the top connector 270 is seated on the holder 1425. After the top connector 270 is seated on the holder 1425, the top connector 270 is inserted into an installation groove 1426 of the upper outer frame 1424, such that a horizontal movement of the top connector 270 is restricted. The installation groove 1426 has a height greater than a height of the holder 1425.

Stepped portions 1426a and 1426bmay be formed between the upper outer frame 1424 and the holder 1425, and the installation groove 1426 may be formed by the stepped portions 1426a and 1426b. An outer surface of the top connector 270 is seated on the holder 1425, and then is engaged with the stepped portions 1426a and 1426b, thereby limiting movement of the top connector 270. After the top connector 270 is inserted into the installation groove 1426, the top connector 270 may move only in an up-down direction, and its horizontal movement is restricted.

The upper outer frame 1424 includes a frame 1424a, coupled to an outer end of the upper vanes 1410, and a guide 1424b disposed at an upper side of the frame 1424a.

The frame 1424a is formed in a ring shape. The outer end of the upper vanes 1410 is coupled to an inner surface of the frame 1424a.

The guide 1424b is disposed at an upper side of the frame 1424a, and is integrally formed with the frame 1424a. The guide 1424b has an inner surface 1423 which is a curved surface. The frame 1424a is formed with a surface being smoothly curved toward the outer end of the upper vanes 1410.

The inner surface 1423 of the frame 1424a may be formed continuously with an inner surface of the guide 1424b, thereby minimizing resistance of the discharged air.

The guide 1424b has a diameter which increases toward the upper side, such that air flowing upward may be diffused easily.

The upper inner frame 1422 is formed in a ring shape. The upper grille water supply port 1421 is formed on an inner surface of the upper inner frame 1422. The upper grille water supply port 1421 is formed to pass through vertically.

The upper grille water supply port 1421 forms a portion of the water supply passage 109. The upper grille water supply port 1421 is disposed below the operation water supply port 241.

The inner end of the upper vanes 1410 is coupled to the outer surface of the upper inner frame 1422. A height of the upper inner frame 1422 is greater than a vertical height of the upper vanes 1410.

A water supply cap 430 is disposed at the upper grille water supply port 1421.

Water, supplied from above, may be temporarily stored in a space between the upper inner frame 1422 and the water supply cap 430. In order to prevent the temporarily stored water from overflowing to the upper vanes 1410, an upper end of the upper inner frame 1422 is disposed higher than the upper end of the upper vanes 1410.

The upper vanes 1410 are inclined relative to the up-down direction. When viewed from top, the plurality of upper vanes 1410 are inclined in a clockwise or counterclockwise direction.

In this embodiment, a planar center of the upper grille 1420 is located within the upper grille water supply port 1421. The watering housing 800 is disposed below the upper grille water supply port 1421, and the center of the upper grille 1420 may be located on a rotation axis of the watering unit 400.

In this embodiment, the upper vanes 1410 may be arranged in a circumferential direction with respect to the upper grille water supply port 1421. Particularly, the upper vanes 1410 may be arranged in a circumferential direction with respect to the center of the upper grille 1420.

In this embodiment, the upper vanes 1410 are inclined in a clockwise direction, such that either one of an edge 1411 on one side of the upper vanes 1410 or an edge 1412 on the other side of the upper vanes 1410 may be disposed higher and the other one may be disposed lower.

In this embodiment, when viewed from top, the edge 1411 disposed on one side of the upper vanes 1410 in a clockwise direction is disposed higher, and the edge 1412 disposed on the other side thereof in a counterclockwise direction is disposed lower.

With respect to two adjacent upper vanes 1410, a first discharge area 1415 is formed between the edge 1411 on one side of the two adjacent upper vanes 1410 and the edge 1412 on the other side thereof. The first discharge area 1415 is formed between each of two adjacent upper vanes 1410. Air may be discharged through the first discharge area 1415. The two adjacent upper vanes 1410 guide the air to the first discharge area 1415.

In this embodiment, the first discharge area 1415 has a width which is smaller at a portion being in contact with the upper inner frame 1422, and which is larger at a portion being in contact with the upper outer frame 1424.

The first discharge area 1415 is disposed outside of the upper inner frame 1422 and is radially disposed with respect to the upper inner frame 1422. Particularly, a plurality of first discharge areas 1415 may be arranged in a circumferential direction of the upper inner frame 1422.

The plurality of first discharge areas 1415 are disposed to be directed toward the center of the upper grille 1420.

Further, air is discharged in a direction of inclination of two adjacent upper vanes 1410. The plurality of upper vanes 1410 are arranged in a clockwise direction, such that the air passing through the upper grille 1420 is radially discharged, while generating a spiral air flow in an upwardly inclined direction.

In addition, the upper grille 1420 further includes a sensing part 1428. The sensing part 1428 interacts with a position sensor 278 disposed at the top cover assembly 230 and provides an electromagnetic signal to the position sensor 278.

The sensing part 1428 provides a signal indicating that the top cover assembly is placed in position. If the top cover assembly 230 is placed in a wrong position, the sensing part 1428 may not provide a signal to the position sensor 278.

The sensing part 1428 may connect the upper inner frame 1422 and the upper outer frame 1424, may be disposed at a lower part of the top connector 270, and may support the top connector 270.

Specifically, the sensing part 1428 is disposed below the top connector cover 274. The sensing part 1428 has an area equal to or smaller than an area of the top connector cover 274. Both edges of the sensing part 1428 are disposed within both sides of the top connector cover 274, without deviating from the top connector cover 274.

The first discharge area 1415 is disposed on each of one side and the other side of the sensing part 1428 in a clockwise direction.

The sensing part 1428 includes a sensing plate 1428a connecting the upper inner frame 1422 and the upper outer frame 1424, and a signal providing member 1428b installing at the sensing plate 1428 and providing a signal to the position sensor 278.

In this embodiment, a Hall sensor for sensing a magnetic signal is used as the position sensor 278, and a permanent magnet is used as the signal providing member 1428. The position sensor 278 senses a magnetic force of the signal providing member 1428b, and senses the home position of the top cover assembly 230. If the position sensor 278 senses that the top cover assembly 230 is in a wrong position, an error is displayed on the display module 160 or the operation module 240.

The sensing plate 1428a is formed to be flat and to face the bottom surface of the top connector cover 274.

The lower grille 1440 includes: a lower inner frame 1442 having a lower grille water supply port 1441formed at the center thereof; a lower outer frame 1444 being spaced apart from the lower inner frame 1442 and formed to surround the lower inner frame 1442; and a plurality of lower vanes 1430 connecting the lower inner frame 1442 and the lower outer frame 1444.

In this embodiment, the lower inner frame 1442 and the lower outer frame 1444 are formed in a ring shape. A diameter of the lower outer frame 1444 is greater than a diameter of the lower inner frame 1442.

It is preferred that the lower inner frame 1442 has a shape corresponding to the upper inner frame 1422, and the lower outer frame 1444 has a shape corresponding to the upper outer frame 1424.

A shape of the lower vanes 1430 may be the same as a shape of the upper vanes 1410.

The lower grille water supply port1441 is disposed below the upper grille water supply port 1421 and corresponds to a shape of the upper grille water supply port 1421.

In this embodiment, the water supply cap 430 is disposed on an inner side of the lower grille water supply port 1441 and the upper grille water supply port 1421. The water supply cap 430 is installed over the lower grille water supply port 1441 and the upper grille water supply port 1421. An upper end of the water supply cap 430 protrudes upward from the upper grille 1420, and protrudes toward an operation water supply port 241 of the top cover assembly 230.

A plurality of lower vanes 1430 are arranged in a circumferential direction with respect to the lower grille water supply port 1441. Particularly, the lower vanes 1430 are arranged in a circumferential direction with respect to the center of the lower grille 1440.

In this embodiment, the lower vanes 1430 are inclined in a counterclockwise direction, such that either one of an edge 1431 on one side of the lower vanes 1430 or an edge 1432 on the other side of the lower vanes 1430 may be disposed higher and the other one may be disposed lower.

In this embodiment, when viewed from top, the edge 1431 disposed on the one side of the lower vanes 1430 in a counterclockwise direction is disposed higher, and the edge 1432 disposed on the other side thereof in a counterclockwise direction is disposed lower.

With respect to two adjacent lower vanes 1430, a second discharge area 1435 is formed between the edge 1431 on the one side of the two adjacent lower vanes 1430 and the edge 1432 on the other side thereof. The second discharge area 1435 is formed between each of two adjacent lower vanes 1430. Air may be discharged through the second discharge area 1435. The two adjacent lower vanes 1430 guide the air to the second discharge area 1435.

In this embodiment, the second discharge area 1435 has a width which is smaller at a portion being in contact with the lower inner frame 1442, and which is larger at a portion being in contact with the lower outer frame 1444.

The second discharge area 1435 is disposed outside of the lower inner frame 1442 and is radially disposed with respect to the lower inner frame 1442. Particularly, a plurality of second discharge areas 1435 may be arranged in a circumferential direction of the lower inner frame 1442.

The plurality of second discharge areas 1435 are disposed to be directed toward the center of the lower grille 1440.

Further, air is discharged in a direction of inclination of two adjacent lower vanes 1430. The plurality of lower vanes 1430 are arranged in a clockwise direction, such that the air passing through the lower grille 1440 is radially discharged, while generating a spiral air flow in an upwardly inclined direction.

In this embodiment, the upper vanes 1410 and the lower vanes 1430 are inclined in opposite directions. That is, the edge 1411 on the side of the upper vanes 1410in a clockwise direction is disposed at a higher position, and the edge 1431 on the side of the lower vanes 1430 is disposed at a lower position.

Further, the lower vanes 1430 are disposed below the first discharge area 1415 and overlap to cover the first discharge area 1415.

When viewed from top, the lower vanes 1430 cover the first discharge area 1415. The lower vanes 1430 are wider in width than the first discharge area 1415. When viewed from top, the lower vanes 1430 are exposed through the first discharge area 1415, and the second discharge area 1435 is not exposed.

In this arrangement, the droplets scattered from the water tank 300 may not directly pass through the second discharge area 1435 and the first discharge area 1415. Even if the scattered droplets pass through the second discharge area 1435, the droplets collide with the upper vanes 1410.

Furthermore, the upper vanes 1410 are disposed over the second discharge area 1435. The upper vanes 1410 are disposed over the second discharge area 1435 and overlap to cover the second discharge area 1435.

When viewed from top, the upper vanes 1410 cover the second discharge area 1435. The upper vanes 1410 are wider in width than the second discharge area 1435.

In the discharge grille1400 according to this embodiment, the upper vanes 1410 and the lower vanes 1430 are disposed in a vertical direction when viewed from top, so as to prevent the droplets from being scattered directly to the grille discharge port 231.

Further, a user may supply water through the operation water supply port 241 formed at the top cover assembly 230. In this embodiment, the water supply cap 430 is exposed through the operation water supply port 241.

Air inside the water tank 300 passes through the first discharge area 1415 and the second discharge area 1435 which are disposed outside of the inner frames 1422 and 1442 of the discharge grille 1400.

Water supplied from above may flow into the water tank 300 through the upper grille water supply port 1421 and the lower grille water supply port 1441 which are disposed inside of the inner frames 1422 and 1442 of the discharge grille 1400.

The first discharge area 1415 and the second discharge area 1435 of the discharge vane 1400 may provide the discharge passage 107, and the upper grille water supply port 421 and the lower grille water supply port 1441 may provide the water supply passage 109.

The lower grille 1440 may further include a reservoir base 442 protruding from the lower inner frame 1442 toward the lower grille water supply port 1441.

The reservoir base 442 is disposed horizontal and is formed in a ring shape when viewed from top. The water supply cap 430 is assembled to the reservoir base 442 and is disposed at an upper side of the reservoir base 442.

A water supply reservoir 441 is formed between the outside of the water supply cap 430 and the inner frames 1422 and 1442.

The water supply reservoir 441 serves to temporarily store the water supplied from above, and is a space surrounded by the water supply cap 430, the reservoir base 442, and the inner frames 1422 and 1442.

The reservoir base 442 has a water supply port 425 passing through the reservoir base 442 in a vertical direction, and the water stored in the water supply reservoir 441 drops into the water tank 300 through the water supply port 425.

If an amount of the supplied water exceeds a capacity of the water supply reservoir 441, the water may overflow out of the inner frames 1422 and 1442 and may drop into the water tank 300 through the first discharge area 1415 and the second discharge area 1435.

The water supplied from above (water dropping through the water supply port) may fall down to the top surface of the watering housing 800, and when the watering housing 800 rotates, the water is scattered to the inner surface of the visual body 210 by the watering housing 800.

When supplying water from above, a user may immediately check a rising level of water through the water level display unit 247. By checking the water level while supplying water from above, the user may adjust an amount of water supplied from above.

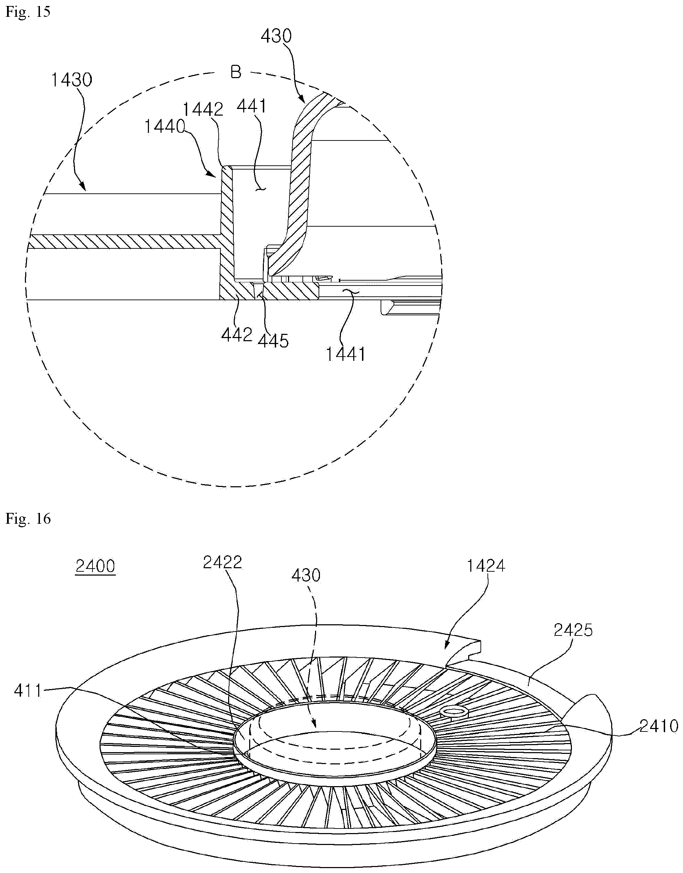

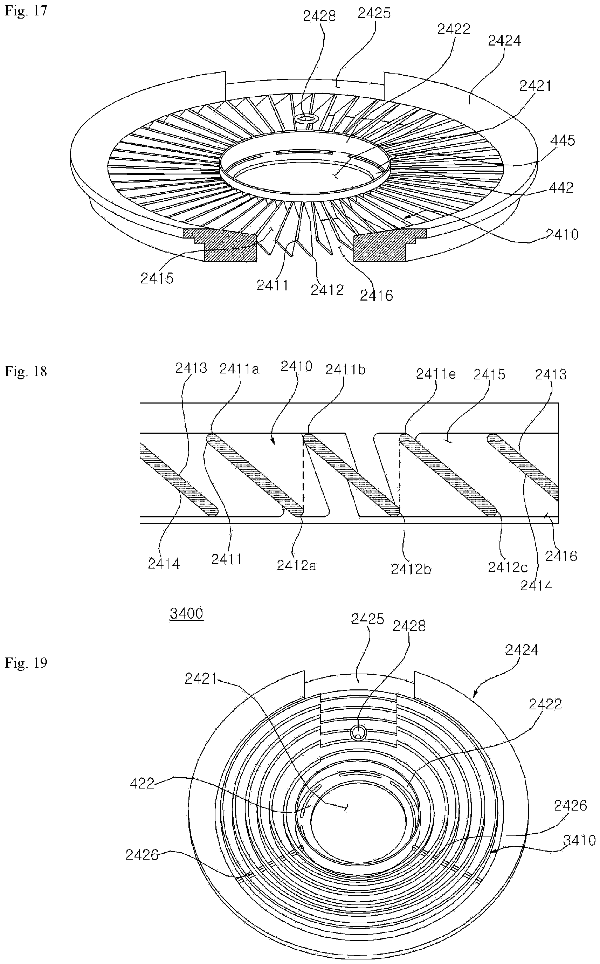

FIG. 16 is a perspective view of discharge vanes according to a second embodiment of the present invention. FIG. 17 is a partially sectional perspective view of FIG. 16. FIG. 18 is a perspective view of vanes of FIG. 17.

Referring to FIGS. 16 to 18, a discharge grill 2400 according to the second embodiment of the present invention will be described below.

While the discharge grille 1400 according to the first embodiment has two vanes which are vertically arranged in a staggered manner, the discharge grill 2400 according to the second embodiment covers the grille discharge port 231 using only the vanes in the first layer.

The discharge grill 2400 includes: an inner frame 2422 having a grille water supply port 2421 formed at the center thereof; an outer frame 2424 formed to surround the inner frame 2422; and a plurality of vanes 2410 connecting the inner frame 2422 and the outer frame 242.

The outer frame 2424 includes a holder 2425 on which the top connector 270 is placed, and the holder 2425 has the same structure as that of the first embodiment.

A sensing part 2428 is disposed toward the center from the holder 2425. The position of the sensing part 2428 is the same as that of the first embodiment, but the sensing part 2428 is disposed between the vanes 2410.

The vanes 2410 may be inclined in a clockwise or counterclockwise direction. In this embodiment, the vanes 2410 are inclined with an upper end of the vanes 2410 being directed toward a clockwise direction, and a lower end of the vanes 2410 being directed toward a counterclockwise direction. When viewed from top, the plurality of vanes 2410 are inclined in a clockwise direction

For convenience of explanation, with respect to any one of the plurality of vanes 2410, a vane disposed in a clockwise direction is defined as a first vane, a vane disposed in a counterclockwise direction is defined as a third vane, and a vane disposed therebetween is defined as a second vane

An area between the upper end of two vanes is defined as a first discharge area 2415, and an area between the lower end of two vanes is defined as a second discharge area 2416.

When viewed from top, an upper end 2411b of the second vane overlaps a lower end 2412a of the first vane, and a lower end 2412b of the second vane overlaps an upper end 2412c of the third vane

Accordingly, when viewed from top, only an inclined upper surface 2413 of the vane 2410 is exposed through the first discharge area 2415, and the inside of the water tank 300 is not directly exposed. When viewed from bottom, only an inclined lower surface 2414 of the vane 2410 is exposed through the second discharge area 2416.

The structure according to this embodiment has an effect of reducing a thickness of the discharge grille of the first embodiment which is manufactured with two layers. Further, as the structure includes only the vanes of the first layer, the entire discharge grille 2400 may be integrally formed by injection molding.

The edges on one side and the other side of the vanes overlap adjacent vanes, such that during injection molding, mold may not be lifted vertically and should be moved in an inclined direction, thereby complicating an operation structure of the mold.

Other components of this embodiment are the same as those of the first embodiment, such that a detailed description thereof will be omitted.

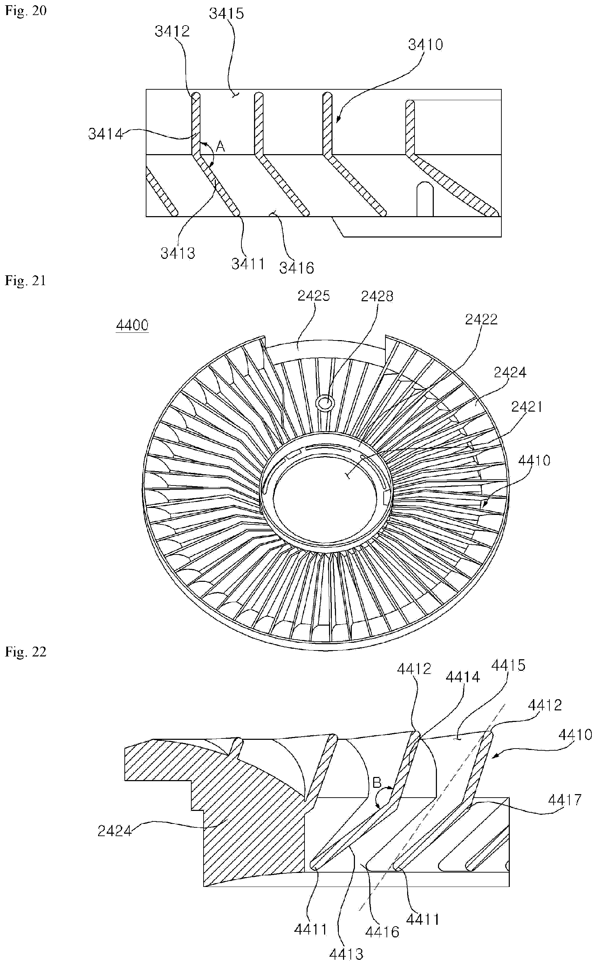

FIG. 19 is a perspective view of a discharge grill according to a third embodiment of the present invention. FIG. 20 is a partial front cross-sectional view of FIG. 19.

Referring to FIGS. 19 and 20, unlike the second embodiment, a discharge grille 3400 according to this embodiment has vanes 3410 formed in a ring shape surrounding the inner frame 2422. The plurality of vanes 3410 have a diameter which increases toward the outer frame 2424.

The respective vanes 3410 form a concentric circle around the center, and a diameter of the concentric circle increases toward the outer side of the vanes 3410.

The discharge grille 3400 includes: an inner frame 2422 having a grille water supply port 2421 formed at the center thereof; an outer frame 2424 formed to surround the inner frame 2422; a connection frame 2426 connecting the inner frame 2422 and the outer frame 2424; and the plurality of vanes 3410 disposed between the inner frame 2422 and the outer frame 2424 and formed to surround the inner frame 2422.

When viewed from top, the vanes 3410 are formed in a ring shape. A diameter of the vanes 3410 adjacent to the inner frame 2422 is smaller than a diameter of the vanes 3410 adjacent to the outer frame 2424.

The connection frame 2426 connects the inner frame 2422 and the outer frame 2424, and the plurality of vanes 3410 are coupled to the connection frame 2426.

In this embodiment, the connection frame 2426 are coupled to a lower end of the vanes 3410. The connection frame 2426 extends outwardly in a radial direction from the center of the discharge grille 3400, and are radially disposed. In this embodiment, three connection frames 2426 are disposed at an angular interval of 120 degrees, but the number of the connection frame 2426 is not limited thereto

The vanes 3410 have a first inclined portion 3413, inclined with respect to a vertical direction, and a second inclined portion 3414 inclined more steeply in a vertical direction than the first inclined portion 3414.

The first inclined portion 3413 and the second inclined portion 3414 may be formed as a flat plate or a curved surface. An included angle A between the first inclined portion 3413 and the second inclined portion 3414 may be greater than 90 degrees and less than 180 degrees.

The second inclined portion 3414 is inclined more steeply than the first inclined portion 3413 in a vertical direction. The second inclined portion 3414 is disposed above the first inclined portion 3413. A lower end 3411 of the first inclined portion 3413 is coupled to the connection frame 2426

The lower end 3411 of the first inclined portion 3413 is disposed toward the watering housing 800. In this embodiment, the second inclined portion 3414 is disposed vertically. An upper end 3412 of the second inclined portion 3414 is disposed upward.

An area between upper ends 3412 of two vanes is defined as a first discharge area 3415, and an area between lower ends 3411 of two vanes is defined as a second discharge area 3416.

The first discharge area 3415 is disposed between the second inclined portions 3414. The second discharge area 3416 is disposed between the first inclined portions 3413.

Other components of this embodiment are the same as those of the second embodiment, such that a detailed description thereof will be omitted.

FIG. 21 is a perspective view of a discharge grille according to a fourth embodiment of the present invention. FIG. 22 is a partial front cross-sectional view of FIG. 21.

Referring to FIGS. 21 and 22, a discharge grille 4400 according to this embodiment has a plurality of vanes 4410 disposed radially as illustrated in the second embodiment, and the respective vanes 4410 have a first inclined portion 4413 and a second inclined portion 4414.

The vanes 4410 have the first inclined portion 4413, inclined with respect to a vertical direction, and the second inclined portion 4414 extending vertically from the first inclined portion 4413 and inclined more steeply in a vertical direction than the first inclined portion 4413.

The first inclined portion 4413 and the second inclined portion 4414 may be formed as a flat plate or a curved surface. An included angle A between the first inclined portion 4413 and the second inclined portion 4414 may be greater than 90 degrees and less than 180 degrees.

An area between upper ends 4412 of two vanes is defined as a first discharge area 4415, and an area between lower ends 4411 of two vanes is defined as a second discharge area 4416.

The first discharge area 4415 is disposed between the second inclined portions 4414. The second discharge area 4416 is disposed between the first inclined portions 4413.

A portion, at which the first inclined portion 4413 and the second inclined portion 4414 meet each other, is defined as a bending portion 4417.

The bending portion 4417 is disposed below a virtual line connecting the upper end 4412 and the lower end 4411 of the respective vanes 4410.

If the vanes 4410 are formed as illustrated in this embodiment, the discharged air may be diffused spirally. In this embodiment, the discharged air is guided through the second portion 4414, thereby enhancing an upward flow of the air.

Other components of this embodiment are the same as those of the second embodiment, such that a detailed description thereof will be omitted.

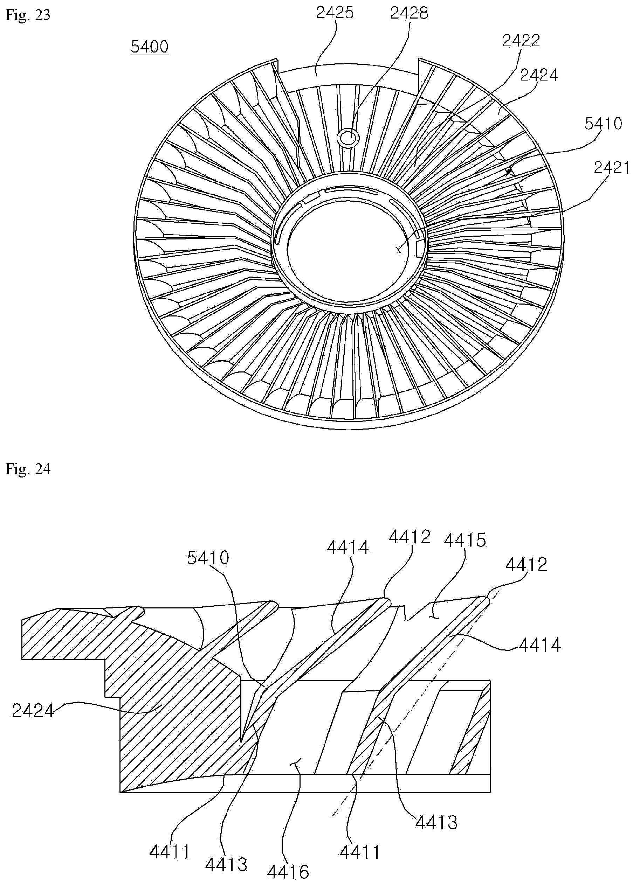

FIG. 23 is a perspective view of a discharge grille according to a fifth embodiment of the present invention. FIG. 24 is a partial front cross-sectional view of FIG. 23.

Compared to the discharge grille 4400 of the fourth embodiment, a discharge grille 5400 of this embodiment has a bending portion 5417 disposed above a virtual line.

Other components of this embodiment are the same as those of the fourth embodiment, such that a detailed description thereof will be omitted.

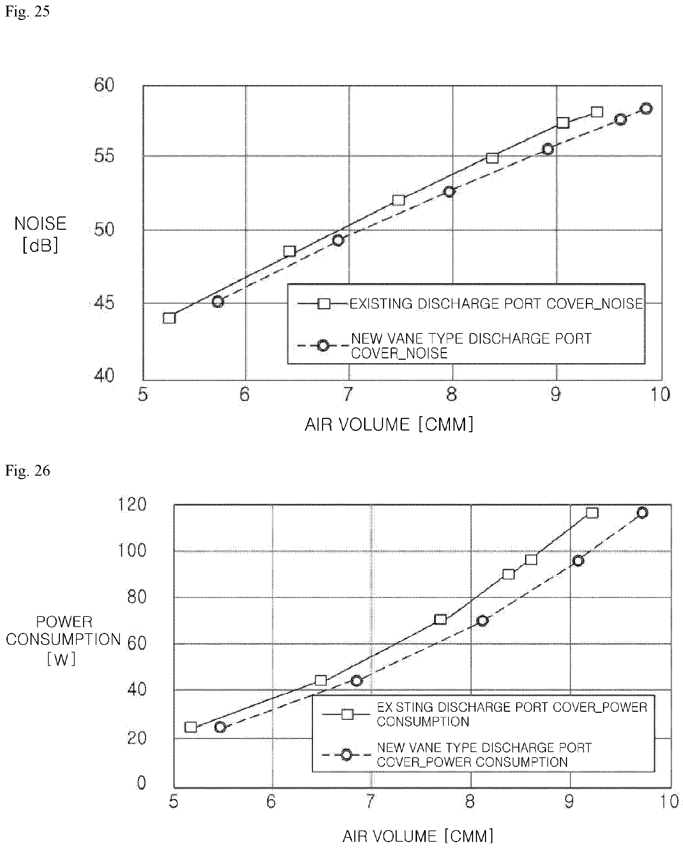

FIG. 25 is diagram illustrating a graph for comparing an air volume and noise between a humidification and air cleaning apparatus according to the first embodiment of the present invention and a general air purifier. FIG. 26 is diagram illustrating a graph for comparing an air volume and power consumption between a humidification and air cleaning apparatus according to the first embodiment of the present invention and a general air purifier.

Referring to FIG. 25, it can be seen that under the same air volume condition, the discharge grille 1400 as illustrated in the first embodiment generates a lower level of noise, compared to a structure disclosed in Korean Laid-Open Patent Publication No. 10-2017-0051233.

In the structure of prior art 1, a large amount of noise is generated as a discharge humidification medium comes into contact with discharged air. However, the discharge grille 1400 according to the first embodiment of the present invention provides an open discharge area for each of the upper grille and the lower grille, thereby minimizing friction noise.

Further, the discharge grille 1400 having the structure of the first embodiment has low friction with the discharged air, thereby providing the same air volume with less power consumption compared to prior art 1.

Although the preferred embodiments of the present invention have been disclosed with reference to the illustrated drawings, those skilled in the art will appreciate that the present invention not limited to those exemplary embodiments and various modifications, additions and substitutions are possible, without departing from the scope of the invention as disclosed in the accompanying claims.

## Claims

1. A humidification and air cleaning apparatus, comprising:
a water tank (300) having a discharge port (231) which is open toward an upper side; and
a discharge grille (1400) disposed at the water tank (300) and covering the discharge port (231),
wherein the discharge grille (1400) has a plurality of vanes (1410, 1430) which are disposed at the discharge port (231) and are spaced apart from each other, and when viewed from top, overlap each other to cover the discharge port (231),
**characterized in that** the discharge grille (1400) is detachably placed at the water tank (300).

2. The apparatus of claim 1, wherein the discharge grille (1400) comprises a lower grille (1440) disposed inside the water tank (300) and covering the discharge port (231), and an upper grille (1420) disposed above the lower grille (1440).

3. The apparatus of claim 2, wherein the upper grille (1420) has a plurality of upper vanes (1410) forming first discharge areas (1415); and/or the lower grille (1440) has a plurality of lower vanes (1430) forming second discharge areas (1435).

4. The apparatus of claim 3, wherein the upper vanes (1410) are disposed over the second discharge areas (1435), and when viewed from top, cover the second discharge areas (1435) and/or the lower vanes (1430) are disposed below the first discharge areas (1415), and when viewed from top, covers the first discharge areas (1415).

5. The apparatus of claim 2, 3 or 4, wherein at least either the lower vanes (1430) or the upper vanes (1410) are inclined with respect to a vertical direction and/or a direction of inclination of the lower vanes (1430) intersects a direction of inclination of the upper vanes (1410).

6. The apparatus of any one of the claims 3-5, wherein the plurality of upper vanes (1410) are disposed radially with respect to a center of the upper grille (1420), and/or the plurality of lower vanes (1430) are disposed radially with respect to a center of the lower grille (1440).

7. The apparatus of any one of the claims 2-6, wherein the plurality of upper vanes (1410) are arranged in a circumferential direction with respect to the center of the upper grille (1420); and/or the plurality of lower vanes (1430) are arranged in a circumferential direction with respect to the center of the lower grille (1440).

8. The apparatus of any one of the claims 2-7, wherein the upper grille (1420) comprises:
an upper inner frame (1422) having an upper grille water supply port (1421) formed at a center thereof;
an upper outer frame (1424) being spaced apart from the upper inner frame (1422) and formed to surround the upper inner frame (1422);
the plurality of upper vanes (1410) connecting the upper inner frame (1422) and the upper outer frame (1424); and
the second discharge areas (1435) formed between the plurality of upper vanes (1410).

9. The apparatus of claim 8, wherein the center of the upper grille (1420) is formed inside the upper inner frame (1422),
wherein the plurality of upper vanes (1410) and the second discharge areas (1435) are disposed radially with respect to the center of the upper grille (1420).

10. The apparatus of any one of the claims 2-9, wherein the lower grille (1440) comprises:
a lower inner frame (1442) having a lower grille water supply port (1441) formed at a center thereof;
a lower outer frame (1444) being spaced apart from the lower inner frame (1442) and formed to surround the lower inner frame (1442);
the plurality of lower vanes (1410) connecting the lower inner frame (1442) and the lower outer frame (1444); and
the first discharge areas (1415) formed between the plurality of lower vanes (1410).

11. The apparatus of claim 10, wherein a center of the lower grille (1440) is formed inside the lower inner frame (1442),
wherein the plurality of lower vanes (1410) and the first discharge areas (1415) are disposed radially with respect to the center of the lower grille (1410).

12. The apparatus of any one of the claims 3-11, wherein the plurality of upper vanes (1430) are disposed over the second discharge areas (1435), and the plurality of lower vanes (1410) are disposed below the first discharge areas (1415),
wherein when viewed from top, the plurality of upper vanes (1430) cover the second discharge areas (1435).

13. The apparatus of any one of the preceding claims, wherein the discharge grille (2400) comprises:
an inner frame (2422) having a grille water supply port (2421) formed therein side;
an outer frame (2424) being spaced apart from the inner frame (2422) and formed to surround the inner frame (2422);
the plurality of vanes (2410) connecting the inner frame (2422) and the outer frame (2424); and
discharge areas (2415, 2416) formed between the plurality of vanes (2410).

14. The apparatus of any one of the preceding claims 1-12, wherein the discharge grille (3400) comprises:
an inner frame (2422) having a grille water supply port (2410) formed therein side;
an outer frame (2424) being spaced apart from the inner frame (2422) and formed to surround the inner frame (2422);
a connection frame (2426) connecting the inner frame (2422) and the outer frame (2424);
the plurality of vanes (3410) disposed between the inner frame (2422) and the outer frame (2424) and formed to surround the inner frame (2422); and
discharge areas (3415, 3416) formed between the plurality of vanes (3410).

## Patentansprüche

1. Befeuchtungs- und Luftreinigungsvorrichtung, die Folgendes umfasst:
einen Wassertank (300), der eine Austrittsöffnung (231) hat, die zu einer Oberseite hin offen ist; und
ein Austrittsgitter (1400), das am Wassertank (300) angeordnet ist und die Austrittsöffnung (231) bedeckt,
wobei das Austrittsgitter (1400) mehrere Flügel (1410, 1430) hat, die an der Austrittsöffnung (231) angeordnet sind und voneinander beabstandet sind und in der Draufsicht überlappen, um die Austrittsöffnung (231) zu bedecken,
**dadurch gekennzeichnet, dass** das Austrittsgitter (1400) am Wassertank (300) abnehmbar angeordnet ist.

2. Vorrichtung nach Anspruch 1, wobei das Austrittsgitter (1400) ein unteres Gitter (1440), das im Wassertank (300) angeordnet ist und die Austrittsöffnung (231) bedeckt, und ein oberes Gitter (1420), das über dem unteren Gitter (1440) angeordnet ist, umfasst.

3. Vorrichtung nach Anspruch 2, wobei das obere Gitter (1420) mehrere obere Flügel (1410) hat, die erste Austrittsbereiche (1415) bilden; und/oder wobei das untere Gitter (1440) mehrere untere Flügel (1430) hat, die zweite Austrittsbereiche (1435) bilden.

4. Vorrichtung nach Anspruch 3, wobei die oberen Flügel (1410) über den zweiten Austrittsbereichen (1435) angeordnet sind und in der Draufsicht die zweiten Austrittsbereiche (1435) bedecken, und/oder die unteren Flügel (1430) unter den ersten Austrittsbereichen (1415) angeordnet sind und in der Draufsicht die ersten Austrittsbereiche (1415) bedecken.

5. Vorrichtung nach Anspruch 2, 3 oder 4, wobei die unteren Flügel (1430) und/oder die oberen Flügel (1410) in Bezug auf eine vertikale Richtung geneigt sind, und/oder eine Neigungsrichtung der unteren Flügel (1430) eine Neigungsrichtung der oberen Flügel (1410) kreuzt.

6. Vorrichtung nach einem der Ansprüche 3-5, wobei die mehreren oberen Flügel (1410) in Bezug auf die Mitte des oberen Gitters (1420) radial angeordnet sind und/oder die mehreren unteren Flügel (1430) in Bezug auf die Mitte des unteren Gitters (1440) radial angeordnet sind.

7. Vorrichtung nach einem der Ansprüche 2-6, wobei die mehreren oberen Flügel (1410) in Bezug auf die Mitte des oberen Gitters (1420) in Umfangsrichtung angeordnet sind; und/oder die mehreren unteren Flügel (1430) in Bezug auf die Mitte des unteren Gitters (1440) in Umfangsrichtung angeordnet sind.

8. Vorrichtung nach einem der Ansprüche 2-7, wobei das obere Gitter (1420) Folgendes umfasst:
einen oberen Innenrahmen (1422), der eine in der Mitte ausgebildete Wasserzufuhröffnung (1421) im oberen Gitter aufweist;
einen oberen Außenrahmen (1424), der vom oberen Innenrahmen (1422) beabstandet ist und so ausgebildet ist, dass er den oberen Innenrahmen (1422) umgibt;
wobei die mehreren oberen Flügel (1410) den oberen Innenrahmen (1422) und den oberen Außenrahmen (1424) verbinden; und
die zweiten Austrittsbereiche (1435) zwischen den mehreren oberen Flügeln (1410) ausgebildet sind.

9. Vorrichtung nach Anspruch 8, wobei die Mitte des oberen Gitters (1420) innerhalb des oberen Innenrahmens (1422) ausgebildet ist,
wobei die mehreren oberen Flügel (1410) und die zweiten Austrittsbereiche (1435) in Bezug auf die Mitte des oberen Gitters (1420) radial angeordnet sind.

10. Vorrichtung nach einem der Ansprüche 2-9, wobei das untere Gitter (1440) Folgendes umfasst:
einen unteren Innenrahmen (1442), der eine in der Mitte ausgebildete Wasserzufuhröffnung (1441) im unteren Gitter aufweist;
einen unteren Außenrahmen (1444), der vom unteren Innenrahmen (1442) beabstandet ist und so ausgebildet ist, dass er den unteren Innenrahmen (1442) umgibt;
wobei die mehreren unteren Flügel (1410) den unteren Innenrahmen (1442) und den unteren Außenrahmen (1444) verbinden; und
die ersten Austrittsbereiche (1415) zwischen den mehreren unteren Flügeln (1410) ausgebildet sind.

11. Vorrichtung nach Anspruch 10, wobei die Mitte des unteren Gitters (1440) innerhalb des unteren Innenrahmens (1442) ausgebildet ist,
wobei die mehreren unteren Flügel (1410) und die ersten Austrittsbereiche (1415) in Bezug auf die Mitte des unteren Gitters (1410) radial angeordnet sind.

12. Vorrichtung nach einem der Ansprüche 3-11, wobei die mehreren oberen Flügel (1430) über den zweiten Austrittsbereichen (1435) angeordnet sind und die mehreren unteren Flügel (1410) unter den ersten Austrittsbereichen (1415) angeordnet sind,
wobei die mehreren oberen Flügel (1430) in der Draufsicht die zweiten Austrittsbereiche (1435) bedecken.

13. Vorrichtung nach einem der vorhergehenden Ansprüche, wobei das Austrittsgitter (2400) Folgendes umfasst:
einen Innenrahmen (2422), der eine darin ausgebildete Wasserzufuhröffnung (2410) im Gitter hat;
einen Außenrahmen (2424), der vom Innenrahmen (2422) beabstandet ist und so ausgebildet ist, dass er den Innenrahmen (2422) umgibt,
wobei die mehreren Flügel (2410) den Innenrahmen (2422) und den Außenrahmen (2424) verbinden; und
Austrittsbereiche (2415, 2416) zwischen den mehreren Flügeln (2410) ausgebildet sind.

14. Vorrichtung nach einem der vorhergehenden Ansprüche 1-12, wobei das Austrittsgitter (3400) Folgendes umfasst:
einen Innenrahmen (2422), der eine darin ausgebildete Wasserzufuhröffnung (2410) im Gitter hat;
einen Außenrahmen (2424), der vom Innenrahmen (2422) beabstandet ist und so ausgebildet ist, dass er den Innenrahmen (2422) umgibt;
einen Verbindungsrahmen (2426), der den Innenrahmen (2422) und den Außenrahmen (2424) verbindet;
wobei die mehreren Flügel (3410) zwischen dem Innenrahmen (2422) und dem Außenrahmen (2424) angeordnet sind und so ausgebildet sind, dass sie den Innenrahmen (2422) umgeben; und
Austrittsbereiche (3415, 3416) zwischen den mehreren Flügeln (3410) ausgebildet sind.

## Revendications

1. Appareil d'humidification et d'épuration d'air, comportant :
un réservoir d'eau (300) ayant un orifice d'évacuation (231) qui est ouvert vers un côté supérieur ; et
une grille d'évacuation (1400) disposée sur le réservoir d'eau (300) et recouvrant l'orifice d'évacuation (231),
dans lequel la grille d'évacuation (1400) a une pluralité d'ailettes (1410, 1430) qui sont disposées sur l'orifice d'évacuation (231) et sont espacées les unes des autres, et, lorsqu'elles sont vues de dessus, se chevauchent de manière à recouvrir l'orifice d'évacuation (231),
**caractérisé en ce que** la grille d'évacuation (1400) est placée sur le réservoir d'eau (300) de manière détachable.

2. Appareil selon la revendication 1, dans lequel la grille d'évacuation (1400) comporte une grille inférieure (1440) disposée à l'intérieur du réservoir d'eau (300) et recouvrant l'orifice d'évacuation (231), et une grille supérieure (1420) disposée au-dessus de la grille inférieure (1440).

3. Appareil selon la revendication 2, dans lequel la grille supérieure (1420) a une pluralité d'ailettes supérieures (1410) formant des premières zones d'évacuation (1415) ; et/ou la grille inférieure (1440) a une pluralité d'ailettes inférieures (1430) formant des secondes zones d'évacuation (1435).

4. Appareil selon la revendication 3, dans lequel les ailettes supérieures (1410) sont disposées au-dessus des secondes zones d'évacuation (1435) et, lorsqu'elles sont vues de dessus, recouvrent les secondes zones d'évacuation (1435) et/ou les ailettes inférieures (1430) sont disposées sous les premières zone d'évacuation (1415) et, lorsqu'elles sont vues de dessus, recouvrent les premières zones d'évacuation (1415).

5. Appareil selon la revendication 2, 3 ou 4, dans lequel au moins soit les ailettes inférieures (1430) soit les ailettes supérieures (1410) sont inclinées par rapport à une direction verticale et/ou une direction d'inclinaison des ailettes inférieures (1430) croise une direction d'inclinaison des ailettes supérieures (1410).

6. Appareil selon l'une quelconque des revendications 3 à 5, dans lequel les ailettes de la pluralité d'ailettes supérieures (1410) sont disposées radialement par rapport à un centre de la grille supérieure (1420) et/ou les ailettes de la pluralité d'ailettes inférieures (1430) sont disposées radialement par rapport à un centre de la grille inférieure (1440).

7. Appareil selon l'une quelconque des revendications 2 à 6, dans lequel les ailettes de la pluralité d'ailettes supérieures (1410) sont agencées dans une direction circonférentielle par rapport à un centre de la grille supérieure (1420) ; et/ou les ailettes de la pluralité d'ailettes inférieures (1430) sont agencées dans une direction circonférentielle par rapport au centre de la grille inférieure (1440).

8. Appareil selon l'une quelconque des revendications 2 à 7, dans lequel la grille supérieure (1420) comporte :
une armature intérieure supérieure (1422) ayant un orifice d'alimentation en eau de grille supérieure (1421) formé en un centre de celle-ci ;
une armature extérieure supérieure (1424) étant espacée de l'armature intérieure supérieure (1422) et formée de manière à entourer l'armature intérieure supérieure (1422) ;
la pluralité d'ailettes supérieures (1410) reliant l'armature intérieure supérieure (1422) et l'armature extérieure supérieure (1424) ; et
les secondes zones d'évacuation (1435) formées entre la pluralité d'ailettes supérieures (1410).

9. Appareil selon la revendication 8, dans lequel le centre de la grille supérieure (1420) est formé à l'intérieur de l'armature intérieure supérieure (1422),
dans lequel la pluralité d'ailettes supérieures (1410) et les secondes zones d'évacuation (1435) sont disposées radialement par rapport au centre de la grille supérieure (1420).

10. Appareil selon l'une quelconque des revendications 2 à 9, dans lequel la grille inférieure (1440) comporte :
une armature intérieure inférieure (1442) ayant un orifice d'alimentation en eau de grille inférieure (1441) formé en un centre de celle-ci ;
une armature extérieure inférieure (1444) étant espacée de l'armature intérieure inférieure (1442) et formée de manière à entourer l'armature intérieure inférieure (1442) ;
la pluralité d'ailettes inférieures (1410) reliant l'armature intérieure inférieure (1442) et l'armature extérieure inférieure (1444) ; et
les premières zones d'évacuation (1415) formées entre la pluralité d'ailettes inférieures (1410).

11. Appareil selon la revendication 10, dans lequel un centre de la grille inférieure (1440) est formé à l'intérieur de l'armature intérieure inférieure (1442),
dans lequel la pluralité d'ailettes inférieures (1410) et les premières zones d'évacuation (1415) sont disposées radialement par rapport au centre de la grille inférieure (1410).

12. Appareil selon l'une quelconque des revendications 3 à 11, dans lequel les ailettes de la pluralité d'ailettes supérieures (1430) sont disposées au-dessus des secondes zones d'évacuation (1435), et les ailettes de la pluralité d'ailettes inférieures (1410) sont disposées sous les premières zones d'évacuation (1415),
dans lequel, lorsqu'elles sont vues de dessus, les ailettes de la pluralité d'ailettes supérieures (1430) recouvrent les secondes zones d'évacuation (1435).

13. Appareil selon l'une quelconque des revendications précédentes, dans lequel la grille d'évacuation (2400) comporte :
une armature intérieure (2422) ayant un orifice d'alimentation en eau de grille (2421) formé à l'intérieur de celle-ci ;
une armature extérieure (2424) étant espacée de l'armature intérieure (2422) et formée de manière à entourer l'armature intérieure (2422) ;
la pluralité d'ailettes (2410) reliant l'armature intérieure (2422) et l'armature extérieure (2424) ; et
des zones d'évacuation (2415, 2416) formées entre la pluralité d'ailettes (2410).

14. Appareil selon l'une quelconque des revendications 1 à 12 précédentes, dans lequel la grille d'évacuation (3400) comporte :
une armature intérieure (2422) ayant un orifice d'alimentation en eau de grille (2410) formé à l'intérieur de celle-ci ;
une armature extérieure (2424) étant espacée de l'armature intérieure (2422) et formée de manière à entourer l'armature intérieure (2422) ;
une armature de liaison (2426) reliant l'armature intérieure (2422) et l'armature extérieure (2424) ;
la pluralité d'ailettes (3410) disposées entre l'armature intérieure (2422) et l'armature extérieure (2424) et formées de manière à entourer l'armature intérieure (2422) ; et
des zones d'évacuation (3415, 3416) formées entre la pluralité d'ailettes (3410).
